(19) Europäisches Patentamt
European Patent Office
Office européen des brevets

(11) EP 4 528 473 A1

(12) EUROPEAN PATENT APPLICATION

(43) Date of publication:
26.03.2025 Bulletin 2025/13

(21) Application number: 24193852.1

(22) Date of filing: 09.08.2024

(51) International Patent Classification (IPC):
G06F 3/12 (2006.01)

(52) Cooperative Patent Classification (CPC):
G06F 3/1208; G06F 3/1244; G06F 3/126;
G06F 3/1282

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.09.2023 JP 2023160051

(71) Applicant: SCREEN Holdings Co., Ltd.
Kyoto-shi, Kyoto 602-8585 (JP)

(72) Inventor: SEGAWA, Hiroyuki
Kyoto, 602-8585 (JP)

(74) Representative: Goddar, Heinz J.
Boehmert & Boehmert
Anwaltspartnerschaft mbB
Pettenkoferstrasse 22
80336 München (DE)

(54) **PRINTING METHOD DETERMINATION METHOD AND PRINTING METHOD DETERMINATION DEVICE**

(57) Provided is a technique of determining a printing method in consideration of quality of printing. A screen is regulated by page data, a range of a page in the screen is regulated by a page region, and the page data includes a content component arranged in the page region and regulating the content. A printing method determination method obtains a ratio of an area of the content component to the page region, and determines the printing method based on the ratio.

FIG. 8A

FIG. 8B

FIG. 8C

J11

Q11

R11

W11

W11

W11

EP 4 528 473 A1

**Description**

BACKGROUND OF THE INVENTION

Field of the invention

The present disclosure relates to a method of determining a printing method and a device determining a printing method.

Description of the Background Art

A technique referred to as a desk top publishing ("DTP" hereinafter) is well known in printing using a printing machine. In the DTP, data expressing a screen to be printed (tentatively referred to as "print target screen" hereinafter) is edited using a computer, and screen content is created, for example. In the editing, an arrangement of an image or a character in the print target screen is edited, for example.

The printing machine (for example, a printer) receives the screen content as print job data, and prints the print target screen. Well known is a technique of setting a printing condition appropriate for contents of the print target screen in the printing. For example, the printing condition is selected based on a result of a simulation of an operation of a processing device referred to as a raster image processor ("RIP" hereinafter) (referred to as "the RIP processing" hereinafter) and a predicted value of an ink consumption amount (for example, refer to Japanese Patent Application Laid-Open No. 2021-135884). A selection of a printing machine can also be considered one of the printing conditions.

Japanese Patent Application Laid-Open No. 2010-21751 introduces trapping before RIP processing in a case where a page includes a graphics object. Japanese Patent Application Laid-Open No. 2022-37537 introduces a technique of drying ink on a surface on which printing is performed.

In Japanese Patent Application Laid-Open No. 2021-135884, the ink consumption amount is predicted for each color, and the printing condition is set in consideration of a predicted value thereof. However, Japanese Patent Application Laid-Open No. 2021-135884 does not consider a type of distribution in which the ink is used in the printing. It is considered to be derived from a fact that the predicted value of the ink consumption amount is used for determination of a printing cost in Japanese Patent Application Laid-Open No. 2021-135884.

Japanese Patent Application Laid-Open No. 2021-135884 does not consider a consumption of the ink in consideration of quality of the printing typical for a resolution in the print target screen. Japanese Patent Application Laid-Open No. 2021-135884 mentions quality, however, the quality is set as a customer condition, and a technique of setting a printing condition corresponding thereto is not explicitly stated in the least.

SUMMARY

An object of the present disclosure is to provide a technique of determining a printing method in consideration of quality of printing.

A printing method determination method in the present disclosure is a method determining a printing method for printing a screen including visual content. The screen is regulated by page data, a range of a page in the screen is regulated by a page region, and the page data includes at least one content component arranged in the page region and regulating the content.

A first aspect of the printing method determination method includes obtaining a ratio of an area of the content component to the page region and determining the printing method based on the ratio.

A second aspect of the printing method determination method according to the present disclosure is the first aspect, wherein the page data includes page content and form content, the page content and the form content individually include the content component, the content component included in the page content is arranged in the page region, and the content component included in the form content is arranged in the page region by a predetermined image conversion.

A third aspect of the printing method determination method according to the present disclosure is the second aspect, wherein all of the content components are any of an image component expressing an image in the screen, a gradation component expressing a shading in the screen, and a screen tint component expressing a screen tint in the screen.

A fourth aspect of the printing method determination method according to the present disclosure is the third aspect, wherein the printing method is determined based on a ratio of an image region in which the image component arranged in the page region is synthesized to the page region, a ratio of a gradation region in which the gradation component arranged in the page region is synthesized to the page region, and a ratio of a screen tint region in which the screen tint component arranged in the page region is synthesized to the page region.

A fifth aspect of the printing method determination method according to the present disclosure is any one of the first to fourth aspects, wherein a parameter for the printing is set based on the ratio to determine the printing method.

A sixth aspect of the printing method determination method according to the present disclosure is the fifth aspect, wherein the printing method is computer-to-print, and the parameter controls drying in the computer-to-print.

A seventh aspect of the printing method determination method according to the present disclosure is any one of the first to sixth aspects, further including determining appropriateness of the printing method determined based on the ratio to a printing machine executing the printing.

An eighth aspect of the printing method determination method according to the present disclosure is any one of the first to seventh aspects, wherein one of the plurality of printing methods different from each other is selected based on the ratio to determine the printing method.

A ninth aspect of the printing method determination method according to the present disclosure is the eighth aspect, wherein the plurality of printing methods include computer-to-print and plate printing.

A printing method determination device according to the present disclosure is a device determining a printing method being for printing a screen including visual content. The screen is regulated by page data, a range of a page in the screen is regulated by a page region, and the page data includes a content component arranged in the page region and regulating the content.

The printing method determination device includes a screen ratio calculation means obtaining a ratio of an area of the content component to the page region and a print processing method determination means determining the printing method based on the ratio.

The printing method is determined in consideration of quality of printing by any of the printing method determination method and the printing method determination device according to the present disclosure.

BRIEF DESCRIPTION OF THE DRAWINGS

Fig. 1 is a block diagram exemplifying a printing system to which a printing method determination method in the present disclosure is applied.
Fig. 2 is a block diagram exemplifying processing in an image processing device as a functional configuration.
Fig. 3 is a block diagram exemplifying a configuration of the image processing device.
Fig. 4 exemplifies one piece of page data as a screen.
Fig. 5 exemplifies page content included in the page data as a screen.
Fig. 6 exemplifies form content included in the page data as a screen.
Fig. 7 exemplifies the other form content included in the page data as a screen.
Figs. 8A, 8B, and 8C exemplify a range of a content component in the page content.
Figs. 9A, 9B, and 9C exemplify a content occupancy range in the form content.
Figs. 10A, 10B, and 10C exemplify a content occupancy range in the other form content.
Figs. 11A, 11B, and 11C exemplify a content occupancy range after a first synthesization in the page content.
Figs. 12A, 12B, and 12C exemplify a content occupancy range after the first synthesization in the form content.
Figs. 13A, 13B, and 13C exemplify a content occupancy range after the first synthesization in the other form content.
Figs. 14A, 14B, 14C, 15A, 15B, and 15C exemplify a second synthesization in the present disclosure.
Fig. 16 is a flow chart showing a procedure of a calculation of a screen ratio.
Fig. 17 is a flow chart exemplifying details of Step S5.
Fig. 18 is a flow chart exemplifying processing of determining the printing method.
Fig. 19 is a flow chart exemplifying processing from a submission of print job data to the determination of the printing method.
Figs. 20 and 21 are flow charts exemplifying details of Step K3.

DESCRIPTION OF THE PREFERRED EMBODIMENTS

Each embodiment of the present disclosure is described hereinafter with reference to the appended diagrams. Constituent elements described in each embodiment are only exemplifications, thus it is not intended that the scope of the present disclosure is limited to the exemplifications alone. The diagrams are only schematically illustrated. A dimension and the number of components are illustrated in exaggeration or in simplified form, as appropriate, in the diagrams for the sake of easier understanding. The same symbol is assigned to a part having a similar configuration and function in the diagrams, and the repetitive description is appropriately omitted.

Unless otherwise noted, expressions indicating shapes (e.g., "rectangle" or "square") indicate those indicating not only geometrically exact shapes but also those indicating, for example, roughness or a chamfer to the extent that similar effect can be obtained. "Square" is a type of "rectangle" in the present disclosure.

An expression "comprising", "including", or "having" one constituent element is not an exclusive expression for excluding the presence of the other constituent elements.

<Image processing device and printing machine>

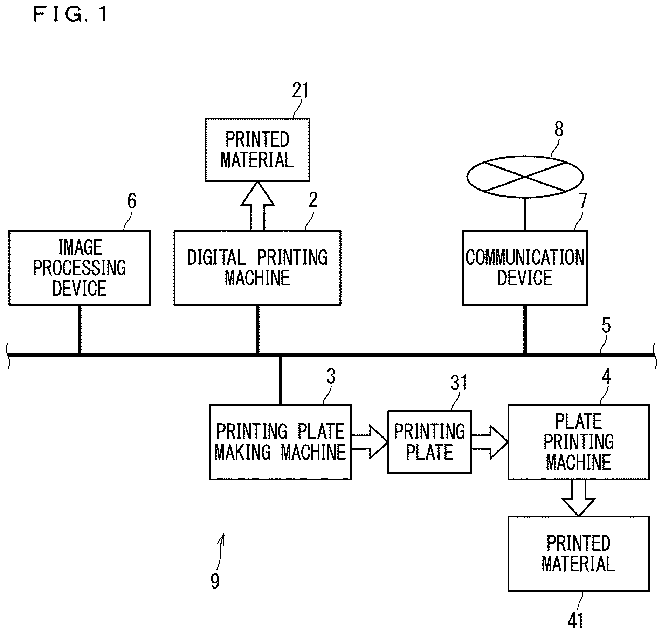

Fig. 1 is a block diagram exemplifying a printing system 9 to which a printing method determination method in the present disclosure is applied. The printing system 9 includes a digital printing machine 2, a printing plate making machine 3, a line 5, an image processing device 6, and a communication device 7.

The digital printing machine 2, the printing plate making machine 3, the image processing device 6, and the communication device 7 are connected to each other via the line 5. The digital printing machine 2 has a function of outputting a printed material 21. The printing plate making machine 3 has a function of outputting a printing plate 31. A plate printing machine 4 has a function of outputting a printed material 41 using the printing plate 31.

A printing method of obtaining the printed material 41 using the printing plate 31 is commonly referred to as plate printing. It can be considered that the plate printing is performed by both the printing plate making machine 3 and the plate printing machine 4. Adopted to the plate making machine 34 is a plate printing system commonly referred to as CTP as computer-to-plate, for example. A printing machine to which a system commonly referred to as CTP as computer-to-press in which the printing plate making machine 3 and the plate printing machine 4 are integrated is adopted may be connected to the line 5 as a printing machine performing plate printing. The plate printing machine 4 can be considered to be included in the printing system 9, or can also be considered to be separated from the printing system 9.

Digital printing may be generally any of plate printing using a printing plate and computer-to-print without using a print plate. However, in the present disclosure, the digital printing machine 2 does not create a printing plate but performs computer-to-print. The computer-to-print is appropriate for on-demand printing commonly referred to as POD. The digital printing performs direct printing on a printing medium by an ink-jet system or an electrophotographic system, for example.

The communication device 7 has a function of having communication with a communication network 8. For example, the communication device 7 receives screen content via the communication network 8, and the screen content is inputted to the image processing device 6 via the line 5.

The image processing device 6 determines a printing method of the screen content using the printing method determination method according to the present disclosure, and transmits instruction to a printing machine appropriate for the determined printing method to print the screen content. For example, screen content to which plate printing is determined to be adopted is transmitted to the printing plate making machine 3, and screen content to which computer-to-print is determined to be adopted is transmitted to the digital printing machine 2, and printing is performed on each of the devices. The image processing device 6 is an exemplification of the printing method determination device according to the present disclosure.

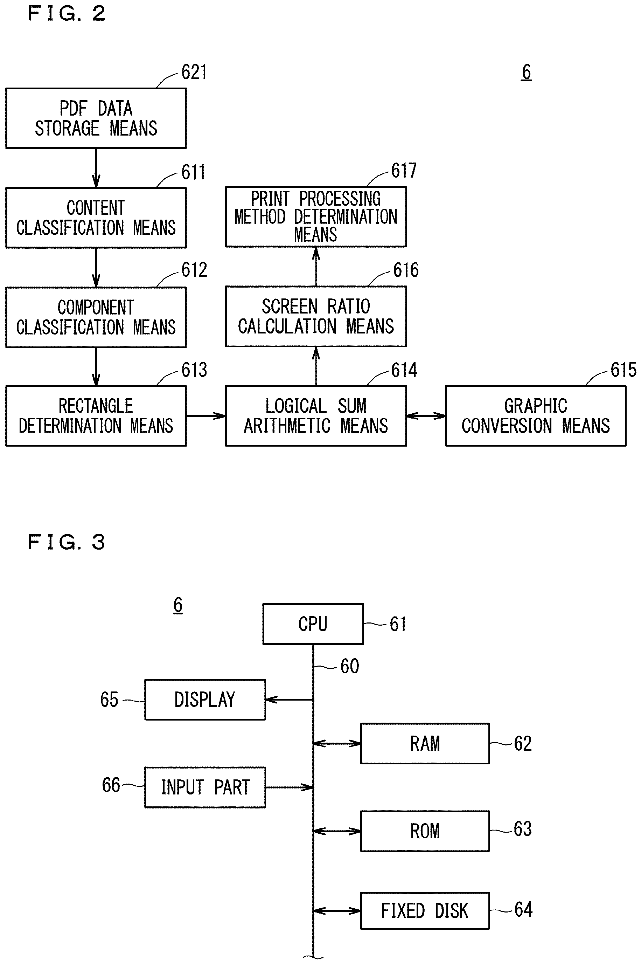

Fig. 2 is a block diagram exemplifying processing in the image processing device 6 as a functional configuration. The configuration includes a PDF data storage means 621, a content classification means 611, a component classification means 612, a rectangle determination means 613, a logical sum arithmetic means 614, a graphic conversion means 615, a screen ratio calculation means 616, and a print processing method determination means 617.

Fig. 3 is a block diagram exemplifying a configuration of the image processing device 6. The image processing device 6 includes an arithmetic part, a memory, and a storage, for example. The arithmetic part is achieved by one or more central processing units (referred to as "CPU" hereinafter) 61, for example. The memory is achieved by a volatile storage medium such as a random access memory (referred to as "RAM" hereinafter) 62 and a non-volatile storage medium such as a read only memory (referred to as "ROM" hereinafter) 63, for example. The storage is achieved by a fixed disk 64 such as a hard disk drive (HDD) or a solid state drive (SSD), for example. The storage can store a program and various types of information, for example. The arithmetic part reads in a program stored in the storage and executes the program, thereby being able to achieve various types of function, for example. In this time, the RAM 62 is used as a work space, and stores information created or obtained temporarily, for example. The ROM 63 stores a basic program executed in the image processing device 6, for example. Fig. 2 exemplifies a case where the image processing device 6 includes a display 65 and an input part 66. The display 65 displays various types of information for an operator. A keyboard or a mouse is adopted to the input part 66, and is used for inputting data or instruction by the operator.

Constituent elements such as the CPU 61, the RAM 62, the ROM 63, the fixed disk 64, the display 65, and the input part 66, for example, included in the image processing device 6 are connected to each other by a bus 60. At least some of the functional configurations achieved by the image processing device 6 may be achieved by hardware such as a dedicated electrical circuit, for example.

For example, a function of the PDF data storage means 621 is achieved by the fixed disk 64. The PDF data storage means 621 stores data to which a portable document format (also simply referred to as "PDF data") is adopted as the screen content. The PDF data is inputted to the image processing device 6 from the communication network 8 via the communication device 7, the line 5, and the bus 60 in this order, for example.

For example, the content classification means 611 has a function of classifying the page content and the form content from the page data. For example, the component classification means 612 has a function of classifying the content component included in the page content or the form content. The content component is data expressing visual content (simply referred to as "content" hereinafter) arranged in a page of the print target screen. The print target screen includes the content. An image, a shading, and a screen tint are exemplified as the content in the description hereinafter. The content may include a character (font).

For example, the rectangle determination means 613 has a function of determining a rectangle as a shape of the content component. For example, the logical sum arithmetic means 614 has a function of performing an arithmetic operation of a logical sum of the determined rectangle. For example, the graphic conversion means 615 has a function of changing a magnification of the obtained rectangle and polygon and locating them. For example, the screen ratio calculation means 616 has a function of calculating a ratio of a region occupied by the content component to a region in which the content component is arranged. For example, the print processing method determination means 617 has a function of determining the print processing method in consideration of the area of the content component. These functions are achieved by the CPU 61, for example. These functions are also described hereinafter in the description of the flow chart.

<Example of screen content>

The PDF data as an example of the screen content is described hereinafter. The PDF data includes the page data, for example. The page data is data corresponding to a page of a print target screen. When the print target screen includes a plurality of pages, the PDF data includes page data corresponding to each page.

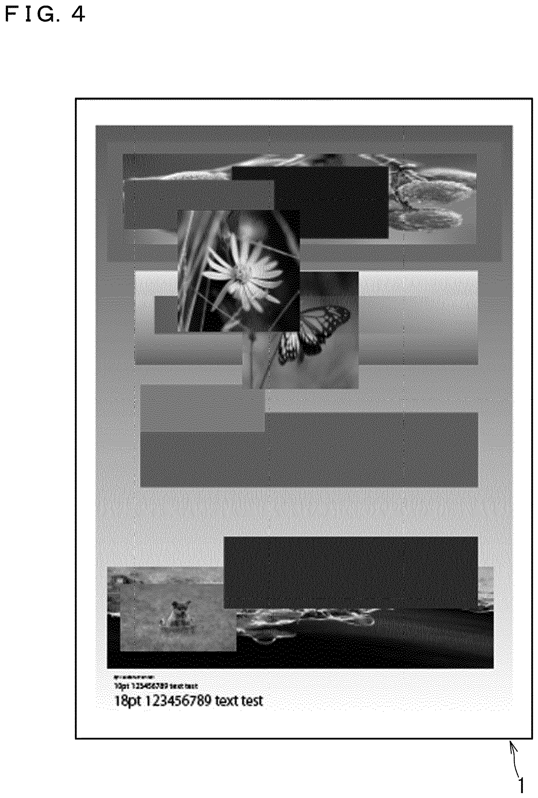

Fig. 4 exemplifies one piece of page data as a screen. The print target screen is regulated by page data 1. Fig. 4 illustrates the page data 1 using the print target screen for a descriptive purpose.

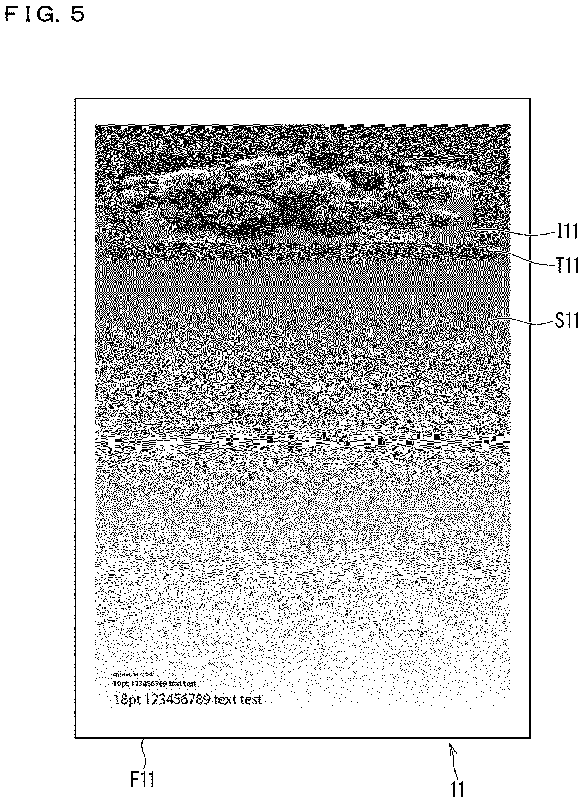

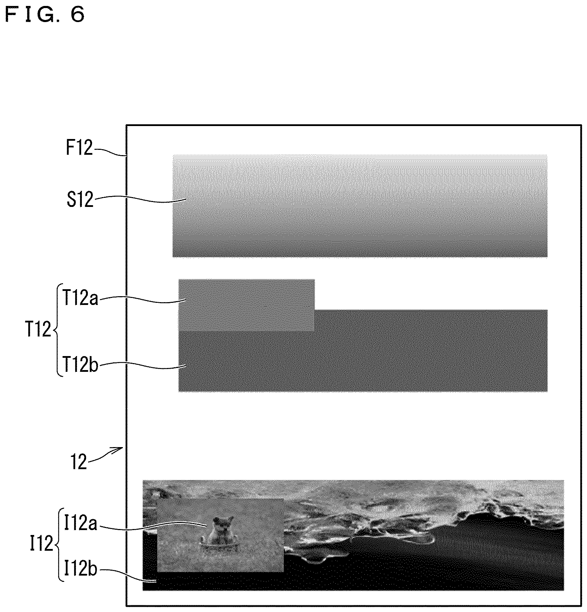

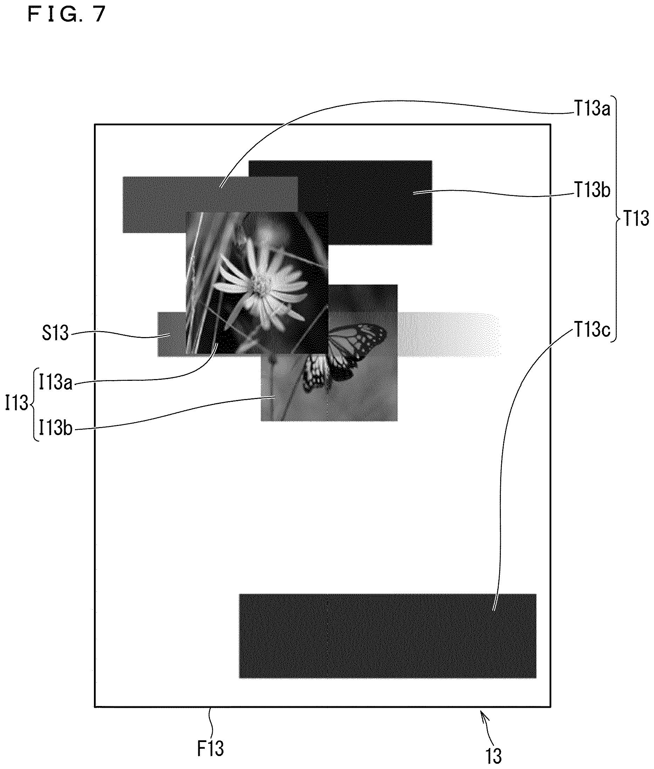

Fig. 5 exemplifies page content 11 included in the page data 1 as a screen. Fig. 6 exemplifies form content 12 included in the page data 1 as a screen. Fig. 7 exemplifies form content 13 included in the page data 1 as a screen.

The page data 1, one piece of page content 11 and the plural pieces, that is two pieces herein, of form content 12 and 13. It can also be considered that all of the page content 11 and two pieces of form content 12 and 13 are described in the page data 1 from a viewpoint of a data description language.

The page content 11 mainly includes a variable component. The content 12 and 13 mainly includes a reuse component. The reuse component is a content component expressing content used in common in different print target screens. The variable component is a content component expressing different types of content in different print target screens. The page content 11 and the form content 12 and 13 individually include a content component.

It can be considered that the page content 11 and the form content 12 and 13 individually describe a content component from a viewpoint of a data description language. It can be considered that the page content 11 mainly describes the variable component from a viewpoint of a data description language. It can be considered that the form content 12 and 13 mainly describes the reused component from a viewpoint of a data description language.

The content component is classified into an image component, a gradation component, and a screen tint component, for example. The image component is data expressing an image arranged in the print target screen. The gradation component is data expressing a shading having uneven gradient and arranged in the print target screen. The screen tint component is data expressing a screen tint arranged in the print target screen. For simplification of the description, the content component is the data, but is illustrated in a form of content in the diagrams in the description hereinafter.

A range of the page in the print target screen is regulated by page region. The page region is described by the page content 11. A region F11 as the page region is exemplified with reference to Fig. 5, for example. For example, the region F11 is a rectangle, and is described by four coordinates (not shown) in rectangular coordinates regulating a longitudinal direction and a short-side direction of the rectangle. The region F11 is referred to as "the page region F11" in some cases hereinafter for a descriptive purpose. It can be considered that the coordinates regulating the page region F11 are described in the page content 11 from a viewpoint of a data description language.

The page content 11 includes a content component arranged in the page region F11. The content component specifically includes an image component I11, a gradation component S11, and a screen tint component T11 each having a polygonal shape, which is a rectangular shape, for example (refer to Fig. 5). Coordinates of corners regulating an arrangement region of the image component I11, coordinates of corners regulating an arrangement region of the gradation component S11, and coordinates of corners regulating an arrangement region of the screen tint component T11 are described in the page content 11, and all of these coordinates are within a range from a maximum value and a minimum value of the coordinates regulating the page region F11 from a viewpoint of a data description language.

As illustrated in Fig. 6, the form content 12 includes a content component arranged in the region F12 having a polygonal shape, which is a rectangular shape, for example (referred to as "the form region F12" in some cases hereinafter for a descriptive purpose). The content component specifically includes image components I12a and I12b (these are collectively referred to as "the image component group I12" in some cases hereinafter), the gradation component S12, and screen tint components T12a and T12b (these are collectively referred to as "the screen tint component group T12" in some cases hereinafter) each having a polygonal shape, that is a rectangular shape, for example. It can be considered from a viewpoint of a data description language that coordinates of corners regulating arrangement regions of the image components I12a and I12b, coordinates of corners regulating an arrangement region of the gradation component S12, and coordinates of corners regulating arrangement regions of the screen tint components T12a and T12b are described in the form content 12, and all of these coordinates are within a range from a maximum value and a minimum value of the coordinates regulating the form region F12.

As illustrated in Fig. 7, the form content 13 includes a content component arranged in a region F13 having a polygonal shape, which is a rectangular shape, for example (referred to as "the form region F13" in some cases hereinafter for a descriptive purpose). The content component specifically includes image components I13a and I13b (these are collectively referred to as "the image component group I13" in some cases hereinafter), the gradation component S13, and screen tint components T13a, T13b, and T13c (these are collectively referred to as "the screen tint component group T13" in some cases hereinafter) each having a polygonal shape, that is a rectangular shape, for example. It can be considered from a viewpoint of a data description language that coordinates of corners regulating arrangement regions of the image components I13a and I13b, coordinates of corners regulating an arrangement region of the gradation component S13, and coordinates of corners regulating arrangement regions of the screen tint components T13a, T13b, and T13c are described in the form content 13, and all of these coordinates are within a range from a maximum value and a minimum value of the coordinates regulating the form region F13.

Three regions of the page region F11 and the form regions F12 and F13 may have regulated shapes different from each other.

In Table 1, content components included in the page data 1 are collectively described in a tabular form. Contents in Table 1 is described in a list form using a data description language, for example.

[Table 1]

| | Page content 11 | Form content 12 | Form content 13 |
| --- | --- | --- | --- |
| Arrangement region | Region F11 | Region F12 | Region F13 |
| First element | Image component I11 | Image component I12a | Image component I13a |
| Second element | Gradation component S11 | Image component I12b | Image component I13b |
| Third element | Screen tint component T11 | Gradation component S12 | Gradation component S13 |
| Fourth element | - | Screen tint component T12a | Screen tint component T13a |
| Fifth element | - | Screen tint component T12b | Screen tint component T13b |
| Sixth element | - | - | Screen tint component T13c |

Table 1 is a list in which an arrangement region and an included element of each content are listed for each of the page content 11, the form content 12, and the form content 13 included in the page data 1. In Table 1, the content components included in the page data 1 are listed in a second column, a third column, and a fourth column for each of the page content 11 and the form content 12 and 13 indicated in a first row. Items indicating a region in which the content component is arranged (abbreviated as "the arrangement region" in Table 1) are described in the second row, and items indicating first to sixth elements are described in sequence in the third to eighth rows.

The content components individually included in the page content 11 and the form content 12 and 13 are indicated in the first to sixth elements. In the above example, the page content 11 includes three content components, thus a sign "-" expresses that the fourth to sixth elements are not included. The form content 12 includes five content components, thus a sign "-" expresses that the sixth element is not included.

The page data 1 is obtained by a synthesization of the page content 11 and the form content 12 and 13 (hereinafter referred to as "a third synthesization" to be distinguished from "a first synthesization" and "a second synthesization" described hereinafter). Specifically, the form content 12 and 13 individually receives image conversion to be arranged in the page region F11. The page data 1 obtained by the third synthesization expresses the print target screen.

By the third synthesization, content expressing a result, as a screen, of all of the image components I12a and I12b, the gradation component S12, and the screen tint components T12a and T12b whose magnifications are changed with a predetermined ratio is arranged in a screen expressed by the page content 11. According to the third synthesization, content expressing a result, as a screen, of all of the image components I13a and I13b, the gradation component S13, and the screen tint components T13a, T13b, and T13c whose magnifications are changed with a predetermined ratio is arranged in a screen expressed by the page content 11.

It can be considered that, as the content components arranged in the page region F11, the page data 1 includes the image components I11, the gradation component S11, and the screen tint component T11, and the page data 1 also includes the image components I12a, I12b, I13a, and I13b, the gradation components S12 and S13, and the screen tint components T12a, T12b, T13a, T13b, and T13c that are all changed in magnifications.

Such a third synthesization is achieved by a description using affine conversion, for example, from a viewpoint of a data description language.

<Area of each content component>

In the present disclosure, quality of printing is considered by consideration of the area occupied by the image, the shading, and the screen tint in the print target screen expressed by the page data 1, and the printing method is determined. The area of the content component is obtained in the present disclosure from this viewpoint.

<Acquirement of region occupied by content component>

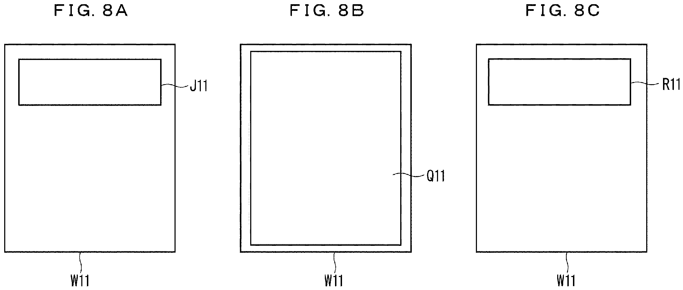

Figs. 8A, 8B, and 8C exemplify a range of the content component in the page content 11 (temporarily referred to as "content occupancy range" hereinafter). Fig. 8A illustrates a rectangle J11 as a content occupancy range of the image component I11 and a rectangle W11 as a range of the page region F11. Fig. 8B illustrates a rectangle Q11 as a content occupancy range of the gradation component S11 and the rectangle W11. Fig. 8C illustrates a rectangle R11 as a content occupancy range of the screen tint component T11 and the rectangle W11.

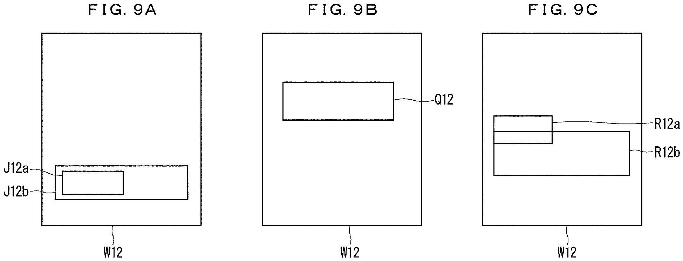

Figs. 9A, 9B, and 9C exemplify a content occupancy range in the form content 12. Fig. 9A illustrates rectangles J12a and J12b as content occupancy ranges of the image components I12a and I12b, respectively, and a rectangle W12 as a range of the form region F12. Fig. 9B illustrates a rectangle Q12 as a content occupancy range of the gradation component S12 and the rectangle W12. Fig. 9C illustrates rectangles R12a and R12b as content occupancy ranges of the screen tint components T12a and T12b, respectively, and the rectangle W12.

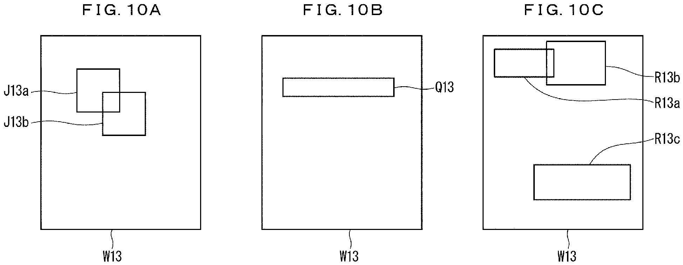

Figs. 10A, 10B, and 10C exemplify a content occupancy range in the form content 13. Fig. 10A illustrates rectangles J13a and J13b as content occupancy ranges of the image components I13a and I13b, respectively, and a rectangle W13 as a range of the form region F13. Fig. 10B illustrates a rectangle Q13 as a content occupancy range of the gradation component S13 and the rectangle W13. Fig. 10C illustrates rectangles R13a, R13b, and R13c as content occupancy ranges of the screen tint components T13a, T13b, and T13c, respectively, and the rectangle W13.

A technique of obtaining the rectangles J11, J12a, J12b, J13a, and J13b from the image components I11, I12a, I12b, I13a, and I13b, respectively, obtaining the rectangles Q11, Q12, and Q13 from the gradation components S11, S12, and S13, respectively, and obtaining the rectangles R11, R12a, R12b, R13a, R13b, and R13c from the screen tint components T11, T12a, T12b, T13a, T13b, and T13c, respectively, that is achievement by the description of the data description language, for example, is well known, thus details thereof is omitted in the present disclosure. For example, the rectangle J11 can be obtained as a logical AND of a region occupied by the page region F11 and a region occupied by the image component I11.

In Table 2, content components included in the page data 1 are collectively described in a tabular form. Contents in Table 2 is described in a list form using a data description language, for example.

[Table 2]

|  | Page content 11 | Form content 12 | Form content 13 |
|---|---|---|---|
| Arrangement region | Rectangle W11 | Rectangle W12 | Rectangle W13 |
| Image component | Rectangle J11 | Rectangle J12a, J12b | Rectangle J13a, J13b |
| Gradation component | Rectangle Q11 | Rectangle Q12 | Rectangle Q13 |
| Screen tint component | Rectangle R11 | Rectangle R12a, R12b | Rectangle R13a, R13b, R13c |

In Table 2, the content occupancy ranges included in the page data 1 are listed in a second column a third column, and a fourth column for each of the page content 11 and the form content 12 and 13 indicated in a first row. Items indicating a range of a region in which the content component is arranged (abbreviated as "the arrangement region" in Table 2) are described in the second row. Items indicating the content occupancy range of the image component are described in the third row. Items indicating the content occupancy range of the gradation component are described in the fourth row. Items indicating the content occupancy range of the screen tint component are described in the fifth row. Items indicating the content occupancy range of the gradation component are described in the sixth row.

<First synthesization>

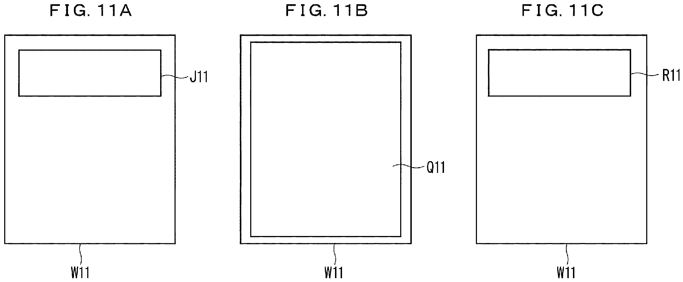

Figs. 11A, 11B, 11C, 12A, 12B, 12C, 13A, 13B, and 13C exemplify content occupancy ranges after the first synthesization in the present disclosure. The first synthesization is individual synthesization of the content occupancy range in each of the page content 11 and form content 12 and 13. In the first synthesization, a logical sum of the content occupancy range is obtained for each of the image component, the gradation component, and the screen tint component. The technique of obtaining the logical sum for the range, which is achievement by the description of the data description language, for example, is well known, thus details thereof is omitted in the present disclosure.

Figs. 11A, 11B, and 11C exemplify a content occupancy range after the first synthesization in the page content 11. With reference to Tables 1 and 2 and Figs. 5, 8A, 8B, and 8C, the page content 11 includes one image component I11, one gradation component S11, and one screen tint component T11, thus the rectangles J11, Q11, and R11 are maintained before and after the first synthesization. Fig. 11A illustrates the rectangles J11 and W11. Fig. 11B illustrates the rectangles Q11 and W11. Fig. 11C illustrates the rectangles R11 and W11.

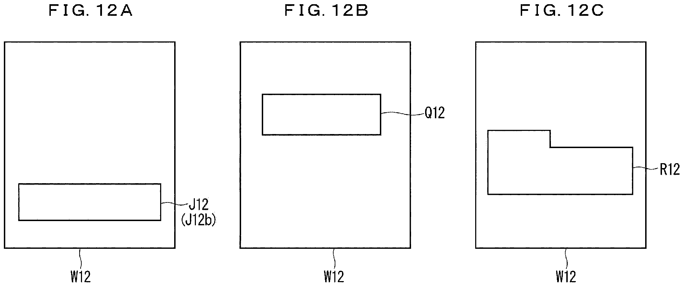

Figs. 12A, 12B, and 12C exemplify a content occupancy range after the first synthesization in the form content 12. Fig. 12A illustrates the rectangles J12 and W12. With reference to Tables 1 and 2 and Figs. 6 and 9A, the form content 12 includes two image components I12a and I12b. The rectangle J12 obtained by the first synthesization is considered the content occupancy range of the image component group I12. However, the rectangle J12a is surrounded by the rectangle J12b (refer to Fig. 9A), thus the rectangle J12 coincides with the rectangle J12b by the first synthesization. The coinciding state is expressed as a symbol "J12 (J12b)" in Fig. 12A.

Fig. 12B illustrates the rectangles Q12 and W12. The form content 12 includes one gradation component S12, thus the rectangles Q12 and W12 are maintained before and after first synthesization.

Fig. 12C illustrates the polygon R12 and the rectangle W12. The form content 12 includes two screen tint components T12a and T12b. The logical sum of the content occupancy range of the screen tint components T12a and T12b is the content occupancy range of the screen tint component group T12, and is expressed by the polygon R12.

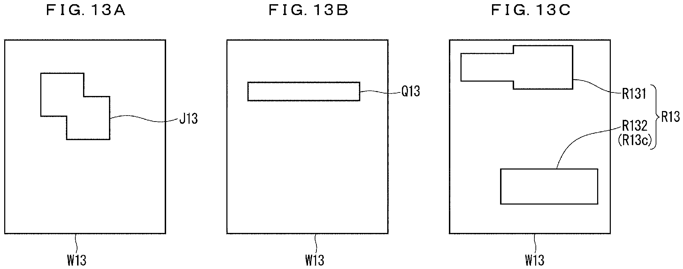

Figs. 13A, 13B, and 13C exemplify a content occupancy range after the first synthesization in the form content 13. Fig. 13A illustrates the polygons J13 and W13. With reference to Tables 1 and 2 and Figs. 7 and 10A, the form content 13 includes two image components I13a and I13b. The logical sum of the image components I13a and I13b is the content occupancy range of the image component group I13, and is expressed by the polygon J13.

Fig. 13B illustrates the rectangles Q13 and W13. The form content 13 includes one gradation component S13, thus the rectangles Q13 and W12 are maintained before and after the first synthesization.

Fig. 13C illustrates the polygon group R13 and the rectangle W13. The polygon group R13 includes a polygon R131 and a rectangle R132. The form content 13 includes three screen tint components T13a, T13b, and T13c. The logical sum of the content occupancy range of the screen tint components T13a and T13b is the polygon R131, and the content occupancy range of the screen tint component T13c is the rectangle R132. The screen tint component T13c does not have contact or overlap with the screen tint components T13a and T13b, thus the rectangle R132 coincides with the rectangle R13c. The coinciding state is expressed as a symbol "R132 (R13c)" in Fig. 13C.

In Table 3, the content occupancy ranges after the first synthesization are collectively described in a tabular form. Contents in Table 3 is described in a list form using a data description language, for example.

[Table 3]

|  | Page content 11 | Form content 12 | Form content 13 |
|---|---|---|---|
| Image polygon | Rectangle J11 | Rectangle J12 | Polygon J13 |
| Gradation polygon | Rectangle Q11 | Rectangle Q12 | Rectangle Q13 |
| Screen tint polygon | Rectangle R11 | Polygon R12 | Polygon group R13 |

In Table 3, the content occupancy ranges after the first synthesization are listed in a second column, a third column, and a fourth column for each of the page content 11 and the form content 12 and 13 indicated in a first row. Items indicating a polygon indicating the content occupancy range of the image component after the first synthesization (abbreviated as "the image polygon" in Table 3) are described in the second row, items indicating a polygon indicating the content occupancy range of the gradation component after the first synthesization (abbreviated as "the gradation polygon" in Table 3) are described in the third row, and items indicating a polygon indicating the content occupancy range of the screen tint component after the first synthesization (abbreviated as "the screen tint polygon" in Table 3) are described in the fourth row.

The content occupancy range after the first synthesization is handled as a first synthesized graphic, which is a temporal name for a convenience purpose. In the above example, with reference to Table 3, the first synthesized graphic for the image of the page content 11 is the rectangle J11, and the first synthesized graphic for the screen tint of the form content 13 is the polygon group R13.

<Second synthesization>

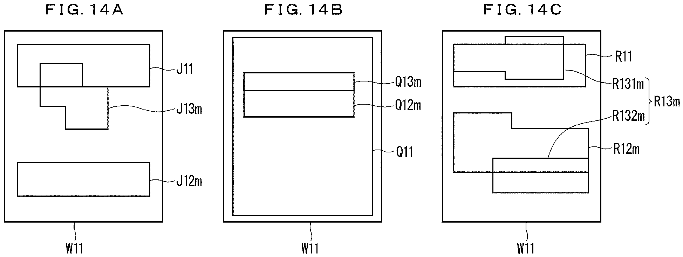

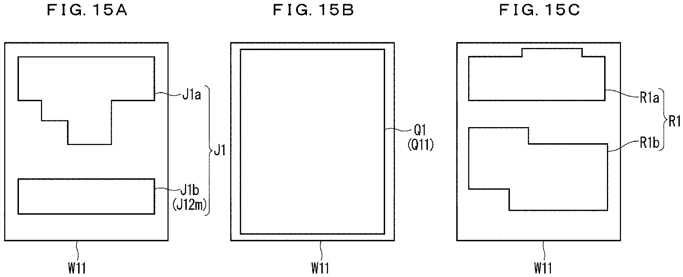

Figs. 14A, 14B, 14C, 15A, 15B, and 15C exemplify a second synthesization in the present disclosure. The second synthesization is synthesization of the content occupancy range without depending on the page content 11 and form content 12 and 13. In the second synthesization, a logical sum of the content occupancy range of each of the image component, the gradation component, and the screen tint component is obtained.

In the second synthesization, a predetermined image conversion is performed on a polygon (including a rectangle) expressing the content occupancy range in each of form content 12 and 13 as a first stage for consideration of the third synthesization. Obtained is a logical sum of the content occupancy range expressed in the page content 11 (this can also be considered to be described by the data description language) and the content occupancy range expressed in the form content 12 and 13 after the image conversion (this can also be considered to be described by the data description language.)

Fig. 14A illustrates the rectangle J11 as the content occupancy range for the image in the page content 11, the rectangle J12m which is the content occupancy range after the image conversion for the image in the form content 12, and the polygon J13m which is the content occupancy range after the image conversion for the image in the form content 13.

Fig. 14B illustrates the rectangle Q11 as the content occupancy range for the shading in the page content 11, the rectangle Q12m which is the content occupancy range after the image conversion for the shading in the form content 12, and the polygon Q13m which is the content occupancy range after the image conversion for the shading in the form content 13.

Fig. 14C illustrates the rectangle R11 as the content occupancy range for the screen tint in the page content 11, the polygon R12m which is the content occupancy range after the image conversion for the screen tint in the form content 12, and the polygon R131m and the rectangle R132m which are the content occupancy ranges after the image conversion for the screen tint in the form content 13. The polygon R131m and the rectangle R132m can be collectively classified as the polygon group R13m. The polygon group R13m may be obtained by the image conversion of the polygon group R13.

The image conversion obtaining the rectangles J12m, Q12m, R132m and the polygons J13m, Q13m, R131m, and R12m from the rectangles J12, Q12, and R132 and the polygons J13, Q13, R131, and R12, respectively, is achieved by a description using affine conversion, for example, from the viewpoint of a data description language.

In the second synthesization, as a second stage, a logical sum of the rectangle and the polygon is obtained in each of the content occupancy range for the image, the content occupancy range for the shading, and the content occupancy range for the screen tint.

Fig. 15A illustrates an image region J1 as a logical sum of the content occupancy range for the image and the rectangle W11. The image region J1 is a logical sum of the rectangles J11 and J12m and the polygon J13m as the content occupancy regions (refer to Fig. 14A). The image region J1 is a graphic integrating the polygons J1a and J1b. The polygon J1a is a logical sum of the rectangle J11 and the polygon J13m. The rectangle J12m does not have contact or overlap with the other content occupancy region (refer to Fig. 14A), thus the polygon J1b coincides with the rectangle J12m. The coinciding state is expressed as a symbol "J1b (J12m)" in Fig. 15A.

Fig. 15B illustrates the gradation region Q1 as a logical sum of the content occupancy range for the shading and the rectangle W11. The gradation region Q1 is a logical sum of the rectangles Q11, Q12m, and J13m (refer to Fig. 14B) as the content occupancy regions. The rectangles Q12m and Q13m do not protrude from the rectangle Q11 (refer to Fig. 14B), thus the gradation region Q1 coincides with the rectangle Q11. The coinciding state is expressed as a symbol "Q1 (Q11)" in Fig. 15B.

Fig. 15C illustrates a screen tint region R1 as a logical sum of the content occupancy range for the screen tint and the rectangle W11. The screen tint region R1 is a logical sum of the rectangles R11 and R132m and the polygons R12m and R131m (refer to Fig. 14C) as the content occupancy regions. The screen tint region R1 is a graphic integrating the polygons R1a and R1b. The polygon R1a is a logical sum of the rectangle R11 and the polygon R131m. The polygon R1b is a logical sum of the polygon R12m and the rectangle R132m.

In Table 4, the logical sum after the second synthesization is collectively described in a tabular form. Contents in Table 4 is described in a list form using a data description language, for example.

[Table 4]

| Image region J1 | Polygon J1a | Polygon J1b |
| --- | --- | --- |
| Gradation region Q1 | Rectangle Q11 | |
| Screen tint region R1 | Polygon R1a | Polygon R1b |

In Table 4, the logical sum after the second synthesization is classified into the image region J1, the gradation region Q1, and the screen tint region R1 in a first column. A breakdown of the logical sum described in each row is described in a second column and a third column. A separated region is described as the breakdown. It is considered that the image region J1 is a logical sum of the polygons J1a and J1b and the screen tint region R1 is a logical sum of the polygons R1a and R1b.

The content occupancy range after the second synthesization is handled as a second synthesized graphic, which is temporal name for a convenience purpose. In the above example, the second synthesized graphic for the image is the image region J1, the second synthesized graphic for the shading is the gradation region Q1, and the second synthesized graphic for the screen tint is the screen tint region R1.

In the present disclosure, an area of the second synthesized graphic is temporarily referred to as "a sum area", and a ratio of the sum area to an area of the page region F11 is temporarily referred to as "a screen ratio". The printing method is determined based on the screen ratio in the present disclosure.

The sum area for the image component is an area of the image region J1 in which the rectangles J11 and J12m and the polygon J13m indicating the image components disposed in the page region F11 are synthesized. The screen ratio for the image component can be considered a ratio of the image region J1 to the rectangle W11 indicating a range of the page region F11.

The sum area for the gradation component is an area of the gradation region Q1 in which the rectangles Q11, Q12m and Q13m indicating the gradation component arranged in the page region F11 are synthesized. The screen ratio for the gradation component can be considered a ratio of the gradation region Q1 to the rectangle W11 indicating the range of the page region F11.

The sum area for the screen tint component is an area of the screen tint region R1 in which the rectangles R11 and R132m and the polygons R131m and R12m indicating the screen tint component arranged in the page region F11 are synthesized. The screen ratio for the screen tint component can be considered a ratio of the screen tint region R1 to the rectangle W11 indicating the range of the page region F11.

<Significance of first synthesization and second synthesization>

As described above, a magnification of the content component included in the form content 12 and 13 is changed in accordance with the image conversion by the third synthesization, and the content component is arranged in the page region F11. Thus, the area occupied by the image, the shading, and the screen tint in the page expressed by the page data 1 is influenced by the image conversion. However, the image conversion is not performed on each content component, but is individually performed on each of the form content 12 and 13. Thus, after the first synthesized graphic is obtained in each of the page content 11 and the form content 12 and 13 by the first synthesization once, the image conversion is performed in a first stage of the second synthesization in the manner similar to the third synthesization, and the logical sum is obtained for each content component in a second stage.

<Significance of individually obtaining logical sum for each content component>

As recognized with reference to Figs. 4 to 7, the different type of content component may have overlapped with each other in the page data 1. For example, in the print target screen expressed by the page data 1, with higher priority than the shading expressed by the gradation component S11, contents expressed by the other content component (for example, an image expressed by the image component I11 or the image component group I12, or a screen tint expressed by the screen tint component group T12) is displayed. Concerning about such a priority, there is a possibility that a printing method in consideration of a degree of influence of the shading in a print target screen accurately is not determined even when the area of the gradation region Q1 is obtained as the sum area for the shading.

However, calculation in consideration of such priority leads to a defect, which is increase of a time of calculation. In other words, the technique according to the present disclosure can be considered to have an advantage of hardly increasing the time of calculation.

<Calculation of screen ratio>

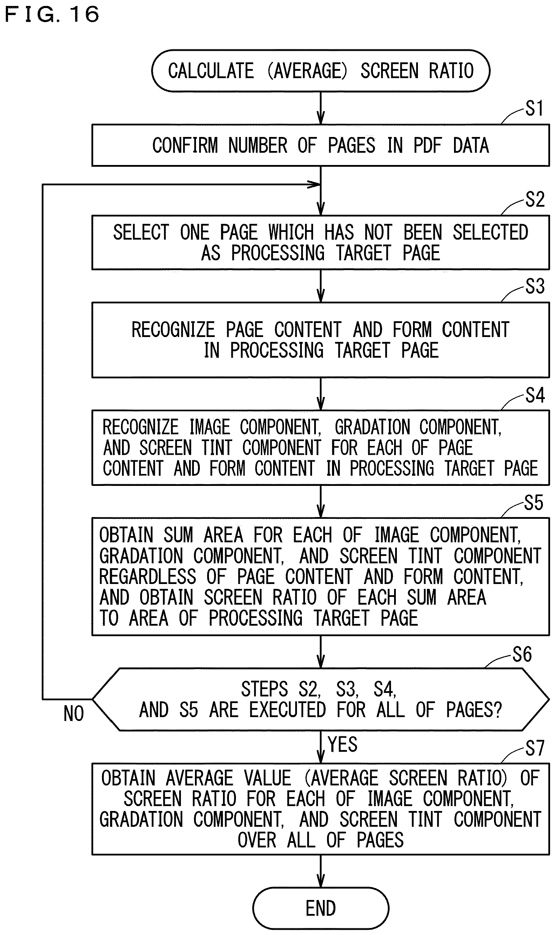

Fig. 16 is a flow chart showing a procedure of a calculation of a screen ratio. The procedure is achieved in the image processing device 6, for example. It can be understood that the procedure is functionally achieved by each means illustrated in Fig. 2, and is structurally achieved by each element illustrated in Fig. 3.

Fig. 16 exemplifies a case where an average value of screen ratios is also calculated over whole pages of the screen taking into account a case where the print target screen has a plurality of pages. The average value is temporarily referred to as "an average screen ratio." Assigned to the flow chart is a title of "calculation (average) screen ratio" in Fig. 16 from such a viewpoint.

The flow chart includes Steps S1, S2, S3, S4, S5, S6, and S7.

In Step S1, the number of pages of the print target screen is confirmed using PDF data expressing the print target screen. The PDF data is stored in the PDF data storage means 621 (refer to Fig. 2), for example, and the number of pages of the print target screen is confirmed from contents described in the PDF data.

Step S2 is executed after Step S1 is executed. In Step S2, one page which has not been selected is selected as a processing target page in the page data. The page data 1 is the processing target page in accordance with Figs. 4 to 15C described above.

Step S3 is executed after Step S2 is executed. The page content and the form content in the processing target page are recognized in Step S3. The page content 11 and the form content 12 and 13 are recognized in the page data 1 in accordance with Figs. 4 to 15C described above. These are recognized from contents described in the page data 1.

For example, an operation of the content classification means 611 (refer to Fig. 2) corresponds to the recognition. Types of the page content 11 and the form content 12 and 13 are different from each other, thus the recognition described above is also considered classification.

Step S4 is executed after Step S3 is executed. In Step S4, the content component is recognized for each type for each of the page content and the form content in the processing target page. Specifically, the image component, the gradation component, and the screen component are recognized. In accordance with Figs. 4 to 15C described above, the image component I11, the gradation component S11, and the screen tint component T11 are recognized in the page content 11, the image components 112a and 112b, the gradation component S12, and the screen tint components T12a and T12b are recognized in the form content 12, and the image components I13a and I13b, the gradation component S13, and the gradation components T13a, T13b, and T13c are recognized in the form content 13 (also refer to Table 1).

For example, an operation of the component classification means 612 (refer to Fig. 2) corresponds to the recognition. The image component, the gradation component, and the screen tint component are the content components but different from each other, thus the recognition is also considered classification.

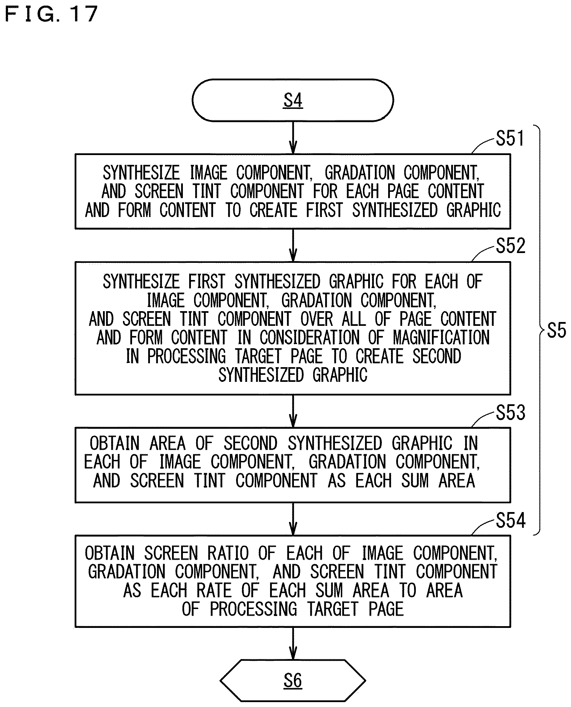

Step S5 is executed after Step S4 is executed. Fig. 17 is a flow chart exemplifying details of Step S5. Step S5 includes Steps S51, S52, S53, and S54 executed in this order.

The sum area described above is obtained in Step S5, more specifically, Steps S51, S52, and S53. The sum area is obtained for each of the image component, the gradation component, and the screen tint component regardless of the page content and the form content. Furthermore, a screen ratio of each sum area to an area of the processing target page is obtained in Step S5, more specifically, Step S54.

The first synthesized graphic is created in Step S51. The first synthesized graphic is created for each of the image component, the gradation component, and the screen tint component recognized in Step S4 for each of the page content and the form content recognized in Step S3. Contents collectively referred in Table 3 indicates the first synthesized graphic in accordance with the above example.

The first synthesized graphic is obtained after the rectangle collectively referred in Table 2 is obtained in accordance with the example described above. The rectangle is determined by the rectangle determination means 613 (refer to Fig. 2), for example. The first synthesization is acquisition of the logical sum of the content occupancy region (refer to Figs. 11A, 11B, 11C, 12A, 12B, 12C, 13A, 13B, and 13C), and the first synthesized graphic is obtained by the logical sum arithmetic means 614 (refer to Fig. 2), for example.

Step S2 is executed after Step S51 is finished. The second synthesized graphic is created in Step S52. The second synthesized graphic is obtained by synthesizing the first synthesized graphic for each of the image component, the gradation component, and the screen tint component over all of the page content and the form content. At this time, the first synthesized graphic of the form content receives a predetermined image conversion as described in the first stage of the second synthesization. A size of the processing target page is determined by an arrangement region regulated by the page content. As described above, the configuration that the magnification of the first synthesized graphic of the form content 12 and 13 is changed by the image conversion to be arranged in the page content 11 is considered the synthesization in consideration of the magnitude in the processing target page. Contents collectively referred in Table 4 indicates the second synthesized graphic in accordance with the above example.

The processing for performing the image conversion on the first synthesization in the first stage of the second synthesization is performed by the graphic conversion means 615 (refer to Fig. 2), for example. An arrow directed to the graphic conversion means 615 from the logical sum arithmetic means 614 expresses input and output of the content occupancy range before the image conversion, and an arrow directed to the logical sum arithmetic means 614 from the graphic conversion means 615 expresses input and output of the content occupancy range after the image conversion. The logical sum in the second stage of the second synthesization is also obtained by the logical sum arithmetic means 614 (Figs. 14A, 14B, 14C, 15A, 15B, and 15C).

Step S53 is executed after Step S52 is finished. In Step S53, an area of the second synthesization graphic is obtained as each sum area in each of the image component, the gradation component, and the screen tint component. In accordance with the above example, the sum area for the image component is an area of the image region J1 and is a sum of areas of the polygons J1a and J1b which do not have overlap with each other. The sum area for the gradation component is an area of the gradation region Q1, and is area of the rectangle Q11. The sum area for the screen tint component is an area of the screen tint region R1 and is a sum of areas of the polygons R1a and R1b which do not have overlap with each other.

The area of the polygon including the rectangle is generally obtained using coordinates of corners thereof. For example, the area of the polygon having n corners is calculated by the following expression using coordinates (xj, yj) of the corners.

[Math 1]

$$S = \frac{1}{2} \left| \sum_{j=1}^{n} (x_j - x_{j+1}) \times (y_j + y_{j+1}) \right| \quad \cdots (1)$$

$$\text{wherein}, \quad x_{n+1} = x_1, \quad y_{n+1} = y_1$$

Step S54 is executed after Step S53 is finished. Obtained in Step S54 is the screen ratio of each of the image component, the gradation component, and the screen tint component. The screen ratio is a rate (ratio) of the sum area to the area of the processing target page.

In the above example, a rate of the area of the image region J1 to the area of the region F11 is the screen ratio of the image component. A rate of the area of the gradation region Q1 to the area of the region F11 is the screen ratio of the gradation component. A rate of the area of the screen tint region R1 to the area of the region F11 is the screen ratio of the screen tint component. The screen ratio is calculated by the screen ratio calculation means 616 (refer to Fig. 2), for example.

When Step S54 is finished, Step S5 is finished, and Step S6 is executed. It is determined in Step S6 whether or not Steps S2, S3, S4, and S5 are executed in all of the pages. When the determination result is negative, there is a page which is not selected as the processing target page in the PDF data. In this case, Step S2 is executed, and Steps S2, S3, S4, and S5 are executed for the new processing target page.

When all of the pages in the PDF data are selected as the processing target pages and Steps S2, S3, S4, and S5 are executed in all the pages, the determination result of Step S6 is positive. In this case, Step S7 is executed.

When the determination result of Step S6 is positive, the screen ratio is obtained for each of the image component, the gradation component, and the screen tint component for all of the pages. In Step S7, an average value (average screen ratio) of the screen ratios over all of the pages is obtained for each of the image component, the gradation component, and the screen tint component. The average screen ratio is calculated by the screen ratio calculation means 616 (refer to Fig. 2), for example. The screen ratio and the average screen ratio are associated with the PDF data, for example, and stored in the fixed disk 64 (refer to Fig. 3).

<Determination of the print processing method>

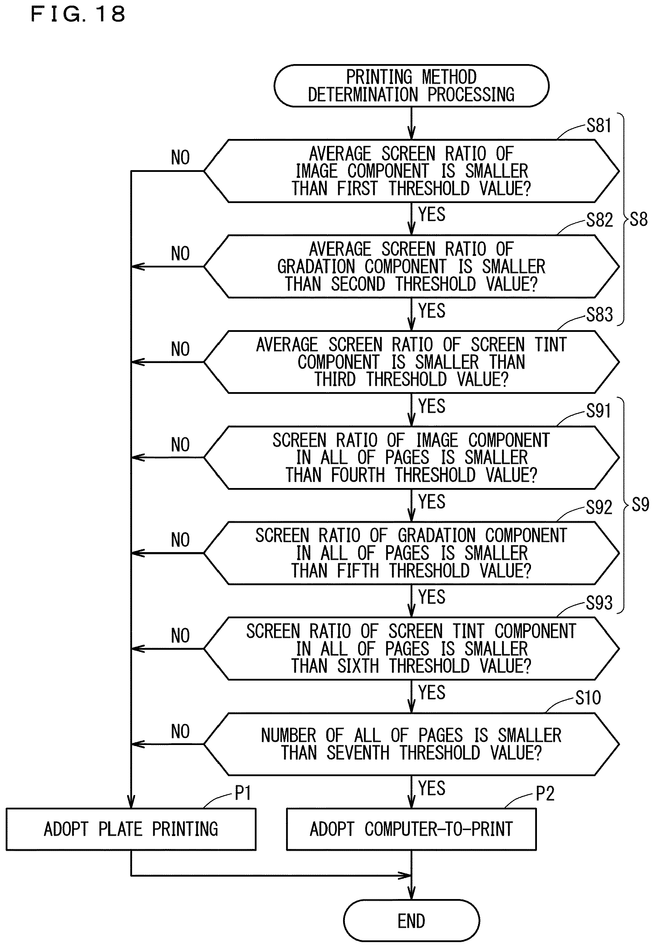

Fig. 18 is a flow chart exemplifying processing of determining the printing method (abbreviated as "printing method determination processing" in the diagrams). The flow chart includes Steps S8, S9, and S10. For example, the average screen ratio and the screen ratio are provided from the screen ratio calculation means 616 to the print processing method determination means 617, and the processing thereof is executed by the print processing method determination means 617 (refer to Fig. 2). The image processing device 6 is considered a printing processing method determination device determining a printing processing method, and includes the screen ratio calculation means 616 and the print processing method determination means 617.

Determination based on the average screen ratio is performed in Step S8. Determination based on the screen ratio for each page is performed in Step S9. Determination based on the number of pages is performed in Step S10.

When any of the determination results in Steps S8, S9, and S10 is negative, it is determined that plate printing is adopted in Step P1. When all of the determination results in Steps S8, S9, and S10 are positive, it is determined that computer-to-print is adopted in Step P2.

Steps S9 and S10 are executed in any order in the flow chart. One or both Steps S9 and S10 may be omitted.

Step S8 includes Steps S81, S82, and S83. Steps S81, S82, and S83 are executed in any order.

It is determined in Step S81 whether the average screen ratio of the image component is smaller than a first threshold value. It is determined in Step S82 whether the average screen ratio of the gradation component is smaller than a second threshold value. It is determined in Step S83 whether the average screen ratio of the screen tint component is smaller than a third threshold value.

A state where the average screen ratio is small corresponds to a state where an area of printed content per unit page is small. In this case, a print speed has higher priority than quality, and computer-to-print is preferably adopted. However, when the printing should be widely performed to the extent that the quality has higher priority than the print speed in any type of content, that is specifically even at least one of the image, the shading, and the screen tint, it is desirable to adopt plate printing.

The first threshold value, the second threshold value, and the third threshold value can be set independently from each other in accordance with features of printing the image, the shading, and the screen tint. For example, the first threshold value, the second threshold value, and the third threshold value are all 30 %.

From the above viewpoint, when the positive determination is performed on all of Steps S81, S82, and S83, it is determined that computer-to-print is adopted in Step P2 except for a case where a negative determination is performed in any of Steps S9 and S10. When a negative determination is performed in any of Steps S81, S82, and S83, it is determined that plate printing is adopted in Step P1.

Fig. 18 exemplifies a case where Step S81 is executed without executing Steps S82 and S83. When the positive determination is obtained in Step S81, Step S82 is executed. When the positive determination is obtained in Step S82, Step S83 is executed. When the positive determination is obtained in Step S83, Step S9 or S10 is executed.

When the positive determination is performed on all of Steps S81, S82, and S83 in a case where Steps S9 and S10 are omitted, it is determined that computer-to-print is adopted in Step P2. From this viewpoint, it can be considered that Steps S9 and S10 performs the determination for exceptional processing on execution of Step P2 based on the determination in Step S8.

Step S9 includes Steps S91, S92, and S93. Steps S91, S92, and S93 are executed in any order.

It is determined in Step S91 whether the screen ratio of the image component is smaller than a fourth threshold value. It is determined in Step S92 whether the screen ratio of the gradation component is smaller than a fifth threshold value. It is determined in Step S93 whether the screen ratio of the screen tint component is smaller than a sixth threshold value in all of the pages.

When the printing should be widely performed to the extent that the quality has higher priority than the print speed in any type of content, that is specifically even at least one of the image, the shading, and the screen tint, and even in one page, it is desirable to adopt plate printing to all of the pages. However, when the printing is narrowly performed in all of the image, the shading, and the screen tint and in any page, computer-to-print can be adopted.

The fourth threshold value, the fifth threshold value, and the sixth threshold value can be set independently from each other in accordance with features of printing the image, the shading, and the screen tint. For example, the fourth threshold value, the fifth threshold value, and the sixth threshold value are all 30 %.

From the above viewpoint, when the positive determination is performed in all of Steps S91, S92, and S93, it is determined that computer-to-print is adopted in Step P2 except for a case where a negative determination is performed in Step S10. When the negative determination is performed in any of Steps S91, S92, and S93, it is determined that plate printing is adopted in Step P1.

Fig. 18 exemplifies a case where Step S91 is executed without executing Steps S92 and S93. When the positive determination is obtained in Step S91, Step S92 is executed. When the positive determination is obtained in Step S92, Step S93 is executed. When the positive determination is obtained in Step S93, Step S10 is executed.

When the positive determination is performed on all of Steps S91, S92, and S93 in a case where Step10 is omitted, it is determined that computer-to-print is adopted in Step P2.

In Step S10, it is determined whether the number of all the pages is smaller than a seventh threshold value. It is preferable to adopt plate printing when the number of pages is large regardless of the type of content, the screen ratio, and the average screen ratio. When the determination result in Step S10 is positive, it is determined that computer-to-print is adopted in Step P2. When the determination result in Step S10 is negative, it is determined that plate printing is adopted in Step P1.

According to such processing, a printing method is determined in consideration of quality of printing without taking into account only an amount of ink consumption.

<Processing from submission of print job data to determination of printing method>

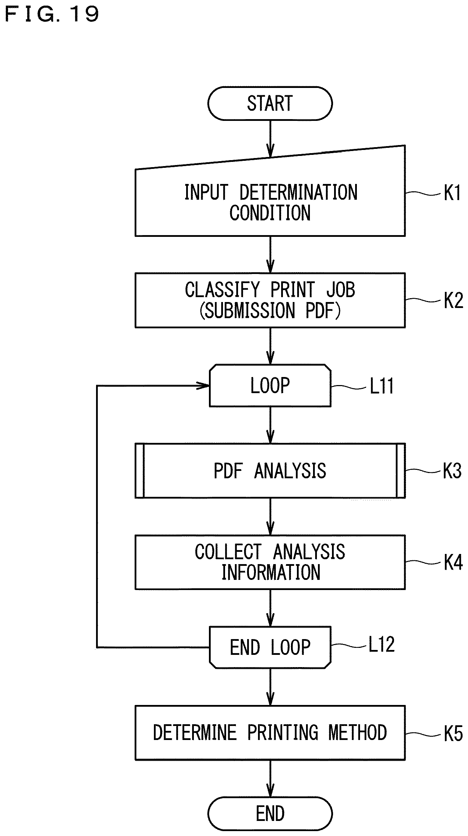

Fig. 19 is a flow chart exemplifying processing from a submission of print job data to determination of the printing method. The processing includes Steps K1, K2, K3, K4, and K5.

Determination conditions are inputted in Step K1. The determination conditions are specifically input from the first threshold value to the third threshold value when Steps S9 and S10 described above is omitted, is input from the first threshold value to the third threshold value and the seventh threshold value when Step S9 is omitted, and is input from the first threshold value to the sixth threshold value when Step S10 is omitted (refer to Fig. 18), for example. These determination conditions are inputted by an operator using the input part 66, for example, and are stored in the RAM 62.

The PDF data submitted as the print job is classified in Step K2. For example, N print jobs are inputted, and are stored in the fixed disk 64 distinguishably from each other.

Steps K3 and K4 are executed on the individual print job, and are repetitively executed N times. Such a repetition is expressed by sandwiching Steps K3 and K4 between a loop start command L11 and a loop stop command L12 in the flow chart. Steps K3 and K4 are repetitively executed on different print jobs between the loop start command L11 and the loop stop command L12.

The PDF data is analyzed (abbreviated as "PDF analysis" in the diagrams) in Step K3. Step K3 is achieved in Steps S1, S2, S3, S4, S5, S6, and S7 (refer to Fig. 16), for example. Specifically, the screen ratio and the average screen ratio are obtained for each of the image component, the gradation component, and the screen tint component.

Information indicating an analysis result executed in Step K3 is collected in Step K4 (abbreviated as "collect analysis information" in the diagrams). In Step K4, the screen ratio and the average screen ratio obtained in Step K3, for example, are collected for each individual print job. The screen ratio and the average screen ratio are associated for each print job and stored in the fixed disk 64, for example.

The printing method is determined in Step K5 (abbreviated as "determine printing method" in the diagrams). Step K5 is achieved by Steps S8, P1, and P2, Steps S8, S9, P1, and P2, Steps S8, S10, P1, and P2, or Steps S8, S9, S10, P1, and P2 (refer to Fig. 18), for example.

All of the flow charts exemplified in Figs. 16 to 19 are executed in the image processing device 6, for example. These calculation and processing are achieved by the CPU 61, for example, executing a program stored in the fixed disk 64 using the RAM 62 and ROM 63.

<Modification>

<First modification>

In the above embodiment, two types of printing method, that is plate printing (refer to P1 in Fig. 18) and computer-to-print (refer to P2 in Fig. 18) are exemplified, however, the number of types of printing method may further be increased. In the present disclosure, one printing method is selected from the plurality of printing method different from each other to determine the printing method. In the above embodiment, plate printing and computer-to-print are exemplified as two printing methods different from each other. One printing method may be selected from three or more printing methods including these two printing methods to determine the printing method.

<Second modification>

It is applicable that adoption of computer-to-print is determined in both Steps P1 and P2 in Fig. 18, and a parameter for printing is different from each other between computer-to-print adopted in Step P1 and computer-to-print adopted in Step P2. The difference of the parameter may also be considered the difference of the printing method.

A specification in drying in computer-to-print can be adopted as the parameter. The specification is introduced in Japanese Patent Application Laid-Open No. 2022-37537, for example. Specifically, for example, it is also applicable to adopt computer-to-print in Step P2 to adopt normal drying, and in the meanwhile, adopt computer-to-print in Step P1 to adopt special drying. For example, a drying temperature is higher in the special drying by 10 % than the normal drying. Alternatively, when the determination in Step S81 is negative, a drying temperature may be determined to be higher such as 10 % to 50 %, for example, as the average screen ratio of the image component is larger.

The print speed can be adopted as the parameter. Specifically, it is also applicable that computer-to-print at a standard speed is adopted in Step P1 and computer-to-print at a higher speed than the standard speed is adopted in Step P2.

In the similar manner, it is applicable that adoption of plate printing is determined in both Steps P1 and P2 in Fig. 18, and a parameter for printing is different from each other between plate printing adopted in Step P1 and plate printing adopted in Step P2. It is also applicable that a parameter for printing is set based on a ratio indicated by the screen ratio or the average screen ratio to determine the printing method.

<Third modification>

Appropriateness of the printing method which has been once determined may be further determined. For example, appropriateness whether a printing method determined in any of Steps P1 and P2 complies with a printing machine executing printing may be determined.

Specifically, when the digital printing machine 2 is connected to the line 5 and the printing plate making machine 3 is not connected with reference to Fig. 1 for example, performable is:

> determination that the printing method does not comply with the printing machine when plate printing is determined in Step P1; and
> determination that the printing method complies with the printing machine when computer-to-print is determined in Step P2.

Alternatively, when the printing plate making machine 3 is connected to the line 5 and the digital printing machine 2 is not connected, performable is:

> determination that the printing method complies with the printing machine when plate printing is determined in Step P1; and
> determination that the printing method does not comply with the printing machine when computer-to-print is determined in Step P2.

<Fourth modification>

For example, the determined printing method is displayed on the display 65, and an operator is informed thereof. For example, appropriateness described in "the third modification" is displayed on the display 65 in place of or together with the determined printing method, and an operator is informed thereof.

<Fifth modification>

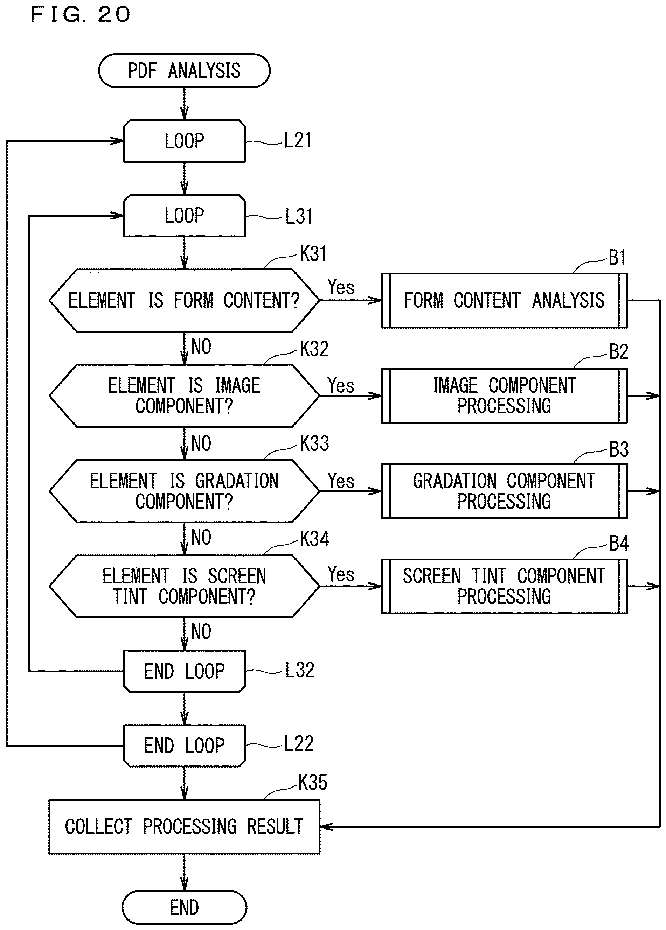

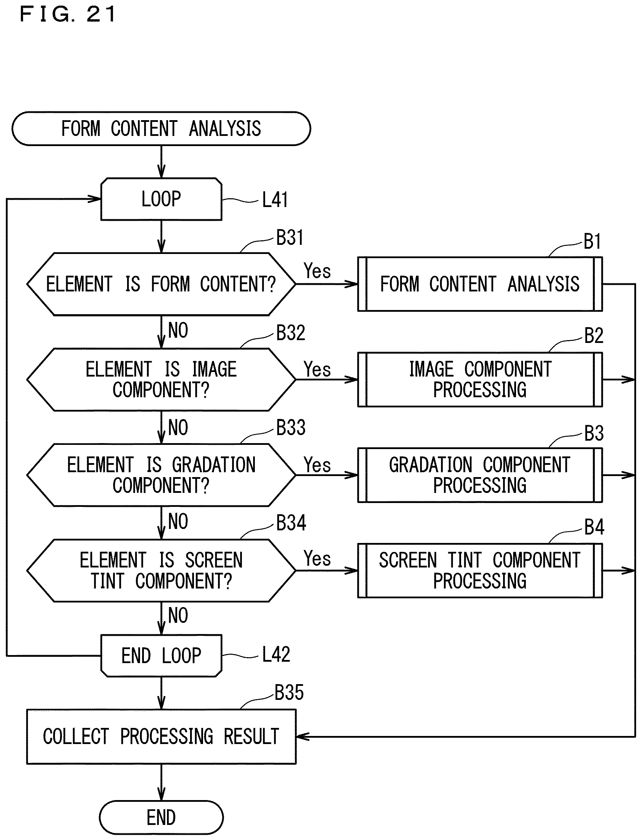

Assumed is a case where the form content further includes the form content. Fig. 20 and Fig. 21 are flow charts exemplifying details of Step K3 including such an assumption.

The flow chart exemplifying in Fig. 20 includes Steps K31, K32, K33, K34, and K35. Steps K31, K32, K33, and K34 are indicated to be sandwiched between a loop start command L31 and a loop stop command L32. The loop start command L31 and the loop stop command L32 repetitively execute plural pieces of processing sandwiched therebetween in one of page data 1. In the above example, the page data 1 includes the page content 11 and the form content 12, and 13, thus Steps K31, K32, K33, and K34 are repetitively executed three times between the loop start command L31 and the loop stop command L32.

The loop start command L31 and the loop stop command L32 are indicated to be sandwiched between a loop start command L21 and a loop stop command L22. The loop start command L21 and the loop stop command L22 repetitively execute plural pieces of processing sandwiched between the loop start command L21 and the loop stop command L22 on respective page. The loop start command L21 and the loop stop command L22 correspond to Steps S1 and S6 in Fig. 16. For example, when the page data 1 indicates two pages, Steps K31, K32, K33, and K34 are repetitively executed 6 (= 3×2) times.

Determined in Step K31 is that the processing on the form content 12 and 13 is branched to the other processing in the page data 1. Herein, both the form content 12 and 13 and the content component are considered elements in the page data 1, and the processing is branched by the elements. Step K31 corresponds to recognition of the form content in Step S3 in Fig. 16.

When the determination result is positive, a form content analysis B1 is executed. For example, when the determination result is positive, the form content analysis B1 is executed on the form content 12 or 13 described above. The form content analysis B1 is described again in Fig. 21.

When the determination result is negative, the processing in Step K32, K33, and K34 is executed on the page content 11.

In Step K32, it is determined whether the element is the image component. In Step K33, it is determined whether the element is the gradation component. In Step K34, it is determined whether the element is the screen tint component. Steps K32, K33, and K34 are executed when the determination result in Step K31 is negative, thus the element herein corresponds to the content component in the page content 11. Thus, the determination in Steps K32, K33, and K34 corresponds to recognition of the content component for the page content in Step S4 in Fig. 16.

When the determination result in Step K32 is positive, image component processing B2 is executed. The image component processing B2 corresponds to creation of the first synthesized graphic (for example, the rectangle J11: refer to Table 3) for the image component in the page content in Step S51 in Fig. 17.

When the determination result in Step K33 is positive, gradation component processing B3 is executed. The gradation component processing B3 corresponds to creation of the first synthesized graphic (for example, the rectangle Q11: refer to Table 3) for the gradation component in the page content in Step S51 in Fig. 17.

When the determination result in Step K34 is positive, screen tint component processing B4 is executed. The screen tint component processing B4 corresponds to creation of the first synthesized graphic (for example, the rectangle R11: refer to Table 3) for the screen tint component in the page content in Step S51 in Fig. 17.

Steps K32, K33, and K34 are executed in any order. Fig. 20 exemplifies a case where Step K32 is executed prior to Steps K33 and K34, and when the determination result in Step K32 is negative, Step K33 is executed, and when the determination result in Step K33 is negative, Step K34 is executed.

Fig. 21 is a flow chart exemplifying details of a form content analysis. The flow chart is used for a form content analysis B1 illustrated in Fig. 20. However, the flow chart itself also includes the form content analysis B1, and can be recursively executed. The recursive execution occurs in a case where the form content further includes form content.

The flow chart exemplifying in Fig. 21 includes Steps B31, B32, B33, B34, and B35. Steps B31, B32, B33, and B34 are indicated to be sandwiched between a loop start command L41 and a loop stop command L42. The loop start command L41 and the loop stop command L42 repetitively execute plural pieces of processing sandwiched between the loop start command L41 and the loop stop command L42 in one of the form content 12 and 13. In the above example, the page data 1 includes the page content 11 and the form content 12, and 13, thus Steps B31, B32, B33, and B34 are repetitively executed twice between the loop start command L41 and the loop stop command L42.

Performed in Step B31 is determination of branching processing on each of the form content 12 and 13 to the other processing. When the form content 12 includes the other form content, for example, the determination is positive. When the determination result is positive, a form content analysis B1 is recursively executed.

When the determination result is negative, the processing in Step B32, B33, and B34 is executed on each of the form content 12 and 13.

In Step B32, it is determined whether the element is the image component. In Step B33, it is determined whether the element is the gradation component. In Step B34, it is determined whether the element is the screen tint component. Steps B32, B33, and B34 are executed when the determination result in Step B31 is negative, thus the element herein corresponds to the content component in the form content 12 and 13. Thus, the determination in Steps B32, B33, and B34 corresponds to recognition of the content component in the form content in Step S4 in Fig. 16.

When the determination result in Step B32 is positive, the image component processing B2 is executed. The image component processing B2 in the flow chart corresponds to creation of the first synthesized graphic (for example, the rectangle J12 for the form content 12 and the polygon J13 for the form content 13: refer to Table 3) for the image component in the page content in Step S51 in Fig. 17.

When the determination result in Step B33 is positive, gradation component processing B3 is executed. The gradation component processing B3 in the flow chart corresponds to creation of the first synthesized graphic (for example, the rectangle Q12 for the form content 12 and the rectangle Q13 for the form content 13: refer to Table 3) for the gradation component for the form content in Step S51 in Fig. 17.

When the determination result in Step B34 is positive, screen tint component processing B4 is executed. The screen tint component processing B4 in the flow chart corresponds to creation of the first synthesized graphic (for example, the polygon R12 for the form content 12 and the polygon group R13 for the form content 13: refer to Table 3) for the screen tint component in the form content in Step S51 in Fig. 17.

Steps B32, B33, and B34 are executed in any order. Fig. 20 exemplifies a case where Step B32 is executed prior to Steps B33 and B34, and when the determination result in Step B32 is negative, Step B33 is executed, and when the determination result in Step B33 is negative, Step B34 is executed.

A processing result by the form content is collected in Step B35. In the above example, data indicating the rectangles J12, Q12, and Q13, the polygons R12 and J13, and the polygon group R13 is collected.

With reference to Fig. 20, collected in Step K35 are a processing result obtained in the form content analysis B1 (this is obtained from a processing result collected in Step B35 for the form content 12 and 13: in the above example, data indicating the rectangles J12, Q12, and Q13, the polygons R12 and J13, and the polygon group R13), a processing result obtained in the image component processing B2 (in the above example, rectangle J11), a processing result obtained in the gradation component processing B3 (in the above example, the rectangle Q11), and a processing result obtained in the screen tint processing B4 (in the above example, the rectangle R11). The second synthesized graphic is created in Step K35, and the screen ratio is obtained. Step K35 corresponds to Steps S52, S53, and S54 in Fig. 17.

It goes without saying that all or part of each embodiment and each modification example can be appropriately combined unless otherwise incompatible with the scope of the present disclosure.

**Claims**

1. A printing method determination method determining a printing method (P1, P2) for printing a screen including visual content (11, 12, 13), comprising:

obtaining (S5, S54, S7) a ratio of an area of a content component (I11, I12a, I13a, S11, S12, S13, T11, T12a, T13a, T13c) to a page region (F11); and
determining (S8, S9, S10, K5) the printing method based on the ratio, wherein
the screen is regulated by page data (1),
a range of a page in the screen is regulated by the page region, and
the page data includes the content component arranged in the page region and regulating the content.

2. The printing method determination method according to claim 1, wherein

the page data (1) includes:
page content (11); and
form content (12, 13),
the page content and the form content individually include the content component (I11, S11, T11; I12a, S12, T12a; I13a, S13, T13a, T13c),
the content component (I11, S11, T11) included in the page content is arranged in the page region (F11), and
the content component (I12a, S12, T12a; I13a, S13, T13a, T13c) included in the form content is arranged in the page region by a predetermined image conversion.

3. The printing method determination method according to claim 2, wherein
all of the content components are any of an image component (I11, I12a, I13a) expressing an image in the screen, a gradation component (S11, S12, S13) expressing a shading in the screen, and a screen tint component (T11, T12a, T13a, T13c) expressing a screen tint in the screen.

4. The printing method determination method according to claim 3, wherein
the printing method (P1, P2) is determined (K5) based on a ratio of an image region (J1) in which the image component (I11, I12a, I13a) arranged in the page region (F11) is synthesized to the page region, a ratio of a gradation region (Q1) in which the gradation component (S11, S12, S13) arranged in the page region is synthesized to the page region, and a ratio of a screen tint region (R1) in which the screen tint component (T11, T12a, T13a, T13c) arranged in the page region is synthesized to the page region.

5. The printing method determination method according to any one of claims 1 to 4, wherein
a parameter for the printing is set based on the ratio to determine (K5) the printing method (P1, P2).

6. The printing method determination method according to claim 5, wherein
the printing method (P1, P2) is computer-to-print, and the parameter controls drying in the computer-to-print.

7. The printing method determination method according to any one of claims 1 to 6, further comprising:
determining appropriateness of the printing method determined based on the ratio to a printing machine executing the printing.

8. The printing method determination method according to any one of claims 1 to 7, wherein
one of the plurality of printing methods (P1, P2) different from each other is selected based on the ratio to determine (S8, S9, S10, K5) the printing method.

9. The printing method determination method according to claim 8, wherein
the plurality of printing methods (P1, P2) include computer-to-print and plate printing.

10. A printing method determination device (6), the printing method (P1, P2) being for printing a screen including visual content (11, 12, 13), comprising:

a screen ratio calculation means (616) obtaining a ratio of an area of a content component to a page region; and
a print processing method determination means (617) determining the printing method based on the ratio, wherein
the screen is regulated by page data (1),
a range of a page in the screen is regulated by the page region (F11), and
the page data includes the content component (I11, I12a, I13a, S11, S12, S13, T11, T12a, T13a, T13c) arranged in the page region and regulating the content.

F I G. 1

FIG. 2

```
┌─────────────────────┐ 621                                              6
│    PDF  DATA        │
│  STORAGE  MEANS     │
└──────────┬──────────┘
           │
           ▼
┌─────────────────────┐ 611      ┌──────────────────────────┐ 617
│     CONTENT         │          │  PRINT  PROCESSING       │
│ CLASSIFICATION MEANS│          │ METHOD  DETERMINATION    │
└──────────┬──────────┘          │      MEANS               │
           │                     └────────────▲─────────────┘
           ▼                                  │
┌─────────────────────┐ 612      ┌────────────┴─────────────┐ 616
│    COMPONENT        │          │    SCREEN  RATIO         │
│ CLASSIFICATION MEANS│          │ CALCULATION  MEANS       │
└──────────┬──────────┘          └────────────▲─────────────┘
           │                                  │
           ▼                                  │
┌─────────────────────┐ 613   ┌──────────────┴──────┐ 614   ┌──────────────────────┐ 615
│    RECTANGLE        │       │   LOGICAL  SUM      │       │      GRAPHIC         │
│ DETERMINATION MEANS │ ────▶ │  ARITHMETIC  MEANS  │ ◀───▶ │  CONVERSION  MEANS   │
└─────────────────────┘       └─────────────────────┘       └──────────────────────┘
```

FIG. 3

```
         6                    ┌──────────┐
                              │   CPU    │── 61
                              └────┬─────┘
                                   │── 60
                                   │
  65 ──┌────────────┐              │
       │  DISPLAY   │ ◀────────────┤
       └────────────┘              │
                                   │      ┌──────────┐
                                   ├────▶ │   RAM    │── 62
                                   │      └──────────┘
  66 ──┌────────────┐              │
       │ INPUT PART │ ────────────▶│
       └────────────┘              │      ┌──────────┐
                                   ├────▶ │   ROM    │── 63
                                   │      └──────────┘
                                   │
                                   │      ┌──────────┐
                                   ├────▶ │ FIXED DISK│── 64
                                   │      └──────────┘
```

FIG. 4

FIG. 5

FIG. 6

FIG. 7

FIG. 8A

FIG. 8B

FIG. 8C

J11

Q11

R11

W11

W11

W11

FIG. 9A

J12a
J12b

W12

FIG. 9B

Q12

W12

FIG. 9C

R12a
R12b

W12

FIG. 10A

FIG. 10B

FIG. 10C

J13a

J13b

W13

Q13

W13

R13b

R13a

R13c

W13

FIG. 11A

FIG. 11B

FIG. 11C

J11

Q11

R11

W11

W11

W11

FIG. 12A

FIG. 12B

FIG. 12C

J12
(J12b)

W12

Q12

W12

R12

W12

FIG. 13A

FIG. 13B

FIG. 13C

J13

W13

Q13

W13

R131

R132
(R13c)

R13

W13

FIG. 14A

J11
J13m
J12m
W11

FIG. 14B

Q13m
Q12m
Q11
W11

FIG. 14C

R11
R131m
R132m } R13m
R12m
W11

FIG. 15A

FIG. 15B

FIG. 15C

J1a

J1b
(J12m)

J1

W11

Q1
(Q11)

W11

R1a

R1b

R1

W11

FIG. 16

```
        ( CALCULATE (AVERAGE) SCREEN RATIO )
                         │
                         ▼                          ┌─ S1
  ┌──────────────────────────────────────────────┐
  │      CONFIRM NUMBER OF PAGES IN PDF DATA       │
  └──────────────────────────────────────────────┘
                         │
                         ▼                          ┌─ S2
  ┌──────────────────────────────────────────────┐
  │  SELECT ONE PAGE WHICH HAS NOT BEEN SELECTED   │
  │          AS PROCESSING TARGET PAGE             │
  └──────────────────────────────────────────────┘
                         │
                         ▼                          ┌─ S3
  ┌──────────────────────────────────────────────┐
  │   RECOGNIZE PAGE CONTENT AND FORM CONTENT      │
  │          IN PROCESSING TARGET PAGE             │
  └──────────────────────────────────────────────┘
                         │
                         ▼                          ┌─ S4
  ┌──────────────────────────────────────────────┐
  │  RECOGNIZE IMAGE COMPONENT, GRADATION COMPONENT,│
  │  AND SCREEN TINT COMPONENT FOR EACH OF PAGE    │
  │  CONTENT AND FORM CONTENT IN PROCESSING TARGET PAGE│
  └──────────────────────────────────────────────┘
                         │
                         ▼                          ┌─ S5
  ┌──────────────────────────────────────────────┐
  │  OBTAIN SUM AREA FOR EACH OF IMAGE COMPONENT,  │
  │  GRADATION COMPONENT, AND SCREEN TINT COMPONENT│
  │  REGARDLESS OF PAGE CONTENT AND FORM CONTENT,  │
  │  AND OBTAIN SCREEN RATIO OF EACH SUM AREA      │
  │  TO AREA OF PROCESSING TARGET PAGE             │
  └──────────────────────────────────────────────┘
                         │
                         ▼                          ┌─ S6
         ╱              STEPS S2, S3, S4,              ╲
   NO ◄──   AND S5 ARE EXECUTED FOR ALL OF PAGES?
         ╲                                          ╱
                         │ YES
                         ▼                          ┌─ S7
  ┌──────────────────────────────────────────────┐
  │ OBTAIN AVERAGE VALUE (AVERAGE SCREEN RATIO) OF │
  │   SCREEN RATIO FOR EACH OF IMAGE COMPONENT,    │
  │ GRADATION COMPONENT, AND SCREEN TINT COMPONENT │
  │            OVER ALL OF PAGES                   │
  └──────────────────────────────────────────────┘
                         │
                         ▼
                     (   END   )
```

F I G. 1 7

```
                    ┌──────────────────┐
                    │        S4        │
                    └──────────────────┘
                             │
                             ▼                              S51
┌──────────────────────────────────────────────────────┐
│  SYNTHESIZE IMAGE COMPONENT, GRADATION COMPONENT,      │
│  AND SCREEN TINT COMPONENT FOR EACH PAGE CONTENT       │
│  AND FORM CONTENT TO CREATE FIRST SYNTHESIZED GRAPHIC  │
└──────────────────────────────────────────────────────┘
                             │
                             ▼                              S52
┌──────────────────────────────────────────────────────┐
│  SYNTHESIZE FIRST SYNTHESIZED GRAPHIC FOR EACH OF      │
│       IMAGE COMPONENT, GRADATION COMPONENT,            │
│  AND SCREEN TINT COMPONENT OVER ALL OF PAGE CONTENT    │
│  AND FORM CONTENT IN CONSIDERATION OF MAGNIFICATION    │    S5
│    IN PROCESSING TARGET PAGE TO CREATE SECOND          │
│                 SYNTHESIZED GRAPHIC                     │
└──────────────────────────────────────────────────────┘
                             │
                             ▼                              S53
┌──────────────────────────────────────────────────────┐
│  OBTAIN AREA OF SECOND SYNTHESIZED GRAPHIC IN          │
│  EACH OF IMAGE COMPONENT, GRADATION COMPONENT,         │
│  AND SCREEN TINT COMPONENT AS EACH SUM AREA            │
└──────────────────────────────────────────────────────┘
                             │
                             ▼                              S54
┌──────────────────────────────────────────────────────┐
│  OBTAIN SCREEN RATIO OF EACH OF IMAGE COMPONENT,       │
│  GRADATION COMPONENT, AND SCREEN TINT COMPONENT        │
│     AS EACH RATE OF EACH SUM AREA TO AREA              │
│             OF PROCESSING TARGET PAGE                  │
└──────────────────────────────────────────────────────┘
                             │
                             ▼
                    ┌──────────────────┐
                    │        S6        │
                    └──────────────────┘
```

## FIG. 18

```
        ┌─────────────────────────────┐
        │     PRINTING METHOD         │
        │  DETERMINATION PROCESSING   │
        └─────────────────────────────┘
                      │
                      ▼                              S81
   NO  ◄──────  AVERAGE SCREEN RATIO OF
                IMAGE COMPONENT IS SMALLER
                THAN FIRST THRESHOLD VALUE?
                      │ YES                          S82    S8
   NO  ◄──────  AVERAGE SCREEN RATIO OF
                GRADATION COMPONENT IS SMALLER
                THAN SECOND THRESHOLD VALUE?
                      │ YES                          S83
   NO  ◄──────  AVERAGE SCREEN RATIO OF SCREEN TINT
                COMPONENT IS SMALLER THAN
                THIRD THRESHOLD VALUE?
                      │ YES                          S91
   NO  ◄──────  SCREEN RATIO OF IMAGE COMPONENT
                IN ALL OF PAGES IS SMALLER
                THAN FOURTH THRESHOLD VALUE?
                      │ YES                          S92    S9
   NO  ◄──────  SCREEN RATIO OF GRADATION COMPONENT
                IN ALL OF PAGES IS SMALLER
                THAN FIFTH THRESHOLD VALUE?
                      │ YES                          S93
   NO  ◄──────  SCREEN RATIO OF SCREEN TINT COMPONENT
                IN ALL OF PAGES IS SMALLER
                THAN SIXTH THRESHOLD VALUE?
                      │ YES                          S10
   NO  ◄──────  NUMBER OF ALL OF PAGES IS SMALLER
                THAN SEVENTH THRESHOLD VALUE?
                      │ YES
   P1                 │              P2
┌──────────────────┐  │  ┌──────────────────────┐
│ ADOPT PLATE      │  │  │ ADOPT COMPUTER-TO-    │
│ PRINTING         │  │  │ PRINT                 │
└──────────────────┘  │  └──────────────────────┘
                      ▼
                 ┌──────────┐
                 │   END    │
                 └──────────┘
```

EP 4 528 473 A1

FIG. 19

START

INPUT DETERMINATION
CONDITION — K1

CLASSIFY PRINT JOB
(SUBMISSION PDF) — K2

LOOP — L11

PDF ANALYSIS — K3

COLLECT ANALYSIS
INFORMATION — K4

END LOOP — L12

DETERMINE PRINTING METHOD — K5

END

35

FIG. 20

```
                    ( PDF ANALYSIS )
                           │
                           ▼
              ┌──────────────────┐
    ┌────────▶│      LOOP        │──L21
    │         └──────────────────┘
    │                  │
    │                  ▼
    │ ┌──────────────────────┐
    │ │        LOOP          │──L31
    │ │ └──────────────────┘
    │ │         │
    │ │         ▼                    ┌K31                          ┌B1
    │ │  ╱ELEMENT IS FORM CONTENT?╲  Yes   ┌────────────────────────┐
    │ │  ╲                        ╱ ─────▶ │  FORM CONTENT ANALYSIS │──┐
    │ │         │                          └────────────────────────┘  │
    │ │         │NO        ┌K32                          ┌B2            │
    │ │  ╱ELEMENT IS IMAGE  ╲        Yes   ┌────────────────────────┐  │
    │ │  ╲  COMPONENT?     ╱ ─────▶ │   IMAGE COMPONENT      │──┐ │
    │ │         │                          │     PROCESSING         │  │ │
    │ │         │NO        ┌K33            └────────────────────────┘  │ │
    │ │  ╱ELEMENT IS GRADATION╲     Yes   ┌────────────────────────┐    │ │
    │ │  ╲  COMPONENT?     ╱ ─────▶ │ GRADATION COMPONENT    │──┐ │ │
    │ │         │                          │     PROCESSING         │  │ │ │
    │ │         │NO        ┌K34            └────────────────────────┘  │ │ │
    │ │  ╱ELEMENT IS SCREEN ╲       Yes   ┌────────────────────────┐    │ │ │
    │ │  ╲ TINT COMPONENT? ╱ ─────▶ │ SCREEN TINT COMPONENT  │──┐ │ │ │
    │ │         │                          │     PROCESSING         │  │ │ │ │
    │ │         │NO                        └────────────────────────┘  │ │ │ │
    │ │  ┌──────────────┐                                               │ │ │ │
    │ └─│   END LOOP    │──L32                                          │ │ │ │
    │    └──────────────┘                                               │ │ │ │
    │           │                                                       │ │ │ │
    │           ▼                                                       │ │ │ │
    │    ┌──────────────┐                                               │ │ │ │
    └────│   END LOOP    │──L22                                          │ │ │ │
         └──────────────┘                                               │ │ │ │
                │          ┌K35                                         │ │ │ │
                ▼                                                       │ │ │ │
    ┌────────────────────────────┐                                     │ │ │ │
    │  COLLECT PROCESSING RESULT  │◀────────────────────────────────────┘─┘─┘─┘
    └────────────────────────────┘
                │
                ▼
            (  END  )
```

FIG. 21

```
                    ┌─────────────────────────┐
                    │  FORM CONTENT ANALYSIS  │
                    └─────────────────────────┘
                                 │
                                 ▼
            ┌───────────────────────┐
     ┌─────▶│        LOOP           │───── L41
     │      └───────────────────────┘
     │                  │                              B31                              B1
     │                  ▼
     │      ┌─────────────────────────┐  Yes   ┌─────────────────────────┐
     │     <  ELEMENT IS FORM CONTENT? >───────▶│  FORM CONTENT ANALYSIS  │────┐
     │      └─────────────────────────┘         └─────────────────────────┘    │
     │                  │ NO              B32                              B2   │
     │                  ▼
     │      ┌─────────────────────────┐  Yes   ┌─────────────────────────┐    │
     │     <  ELEMENT IS IMAGE         >───────▶│   IMAGE COMPONENT       │───▶│
     │      \  COMPONENT?             /         │   PROCESSING            │    │
     │       └───────────────────────┘         └─────────────────────────┘    │
     │                  │ NO              B33                              B3   │
     │                  ▼
     │      ┌─────────────────────────┐  Yes   ┌─────────────────────────┐    │
     │     <  ELEMENT IS GRADATION     >───────▶│  GRADATION COMPONENT    │───▶│
     │      \  COMPONENT?             /         │  PROCESSING             │    │
     │       └───────────────────────┘         └─────────────────────────┘    │
     │                  │ NO              B34                              B4   │
     │                  ▼
     │      ┌─────────────────────────┐  Yes   ┌─────────────────────────┐    │
     │     <  ELEMENT IS SCREEN        >───────▶│  SCREEN TINT COMPONENT  │───▶│
     │      \  TINT COMPONENT?        /         │  PROCESSING             │    │
     │       └───────────────────────┘         └─────────────────────────┘    │
     │                  │ NO                                                    │
     │                  ▼                                                       │
     │      ┌───────────────────────┐                                          │
     └──────│      END LOOP         │───── L42                                  │
            └───────────────────────┘                                          │
                       │                B35                                     │
                       ▼                                                        │
            ┌───────────────────────────┐                                      │
            │ COLLECT PROCESSING RESULT │◀─────────────────────────────────────┘
            └───────────────────────────┘
                       │
                       ▼
                 ┌──────────┐
                 │   END    │
                 └──────────┘
```

**EUROPEAN SEARCH REPORT**

Application Number

EP 24 19 3852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/367652 A1 (GRACIA VERDUGO ANTONIO [ES] ET AL) 24 December 2015 (2015-12-24) | 1-8,10 | INV. G06F3/12 |
| Y | * figures 2A-2B, 4, 6-7B * * paragraphs [0014] - [0017] * * paragraphs [0023] - [0040] * | 9 | |
| | ----- | | |
| X | US 2022/001684 A1 (INAGAKI KOUJI [JP]) 6 January 2022 (2022-01-06) * figures 2, 7A-8D * * paragraphs [0126] - [0156] * | 1,10 | |
| | ----- | | |
| Y | US 2017/132501 A1 (YAMAKAWA TAKUYA [JP]) 11 May 2017 (2017-05-11) | 9 | |
| A | * figures 1,4,11 * * paragraphs [0041] - [0099] * | 1-8,10 | |
| | ----- | | |

**TECHNICAL FIELDS SEARCHED (IPC)**

G06F
B41J
H04N
G06K
H04L

The present search report has been drawn up for all claims

| Place of search | Date of completion of the search | Examiner |
|---|---|---|
| The Hague | 18 January 2025 | Vilella, Josep |

## ANNEX TO THE EUROPEAN SEARCH REPORT
## ON EUROPEAN PATENT APPLICATION NO.

EP 24 19 3852

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2025

| Patent document cited in search report | | | Publication date | Patent family member(s) | | | Publication date |
|---|---|---|---|---|---|---|---|
| US 2015367652 | A1 | | 24-12-2015 | CN | 104955654 | A | 30-09-2015 |
| | | | | EP | 2948309 | A1 | 02-12-2015 |
| | | | | US | 2015367652 | A1 | 24-12-2015 |
| | | | | WO | 2014114350 | A1 | 31-07-2014 |
| US 2022001684 | A1 | | 06-01-2022 | CN | 112740271 | A | 30-04-2021 |
| | | | | EP | 3852058 | A1 | 21-07-2021 |
| | | | | JP | 6823839 | B2 | 03-02-2021 |
| | | | | JP | 2020204906 | A | 24-12-2020 |
| | | | | KR | 20220021902 | A | 22-02-2022 |
| | | | | US | 2022001684 | A1 | 06-01-2022 |
| | | | | WO | 2020255967 | A1 | 24-12-2020 |
| US 2017132501 | A1 | | 11-05-2017 | EP | 3166301 | A1 | 10-05-2017 |
| | | | | JP | 6743367 | B2 | 19-08-2020 |
| | | | | JP | 2017091145 | A | 25-05-2017 |
| | | | | US | 2017132501 | A1 | 11-05-2017 |
| | | | | US | 2018314923 | A1 | 01-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021135884 A
- JP 2010021751 A
- JP 2022037537 A